(19) Europäisches Patentamt
European Patent Office
Office européen des brevets

(11) **EP 3 569 577 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **19174408.5**

(22) Anmeldetag: **14.05.2019**

(51) Internationale Patentklassifikation (IPC):
**C03C 3/091** (2006.01) **C03C 4/00** (2006.01)
**C03C 4/10** (2006.01) **C03C 4/20** (2006.01)

(52) Gemeinsame Patentklassifikation (CPC):
**C03C 3/091; C03C 4/0085; C03C 4/0092; C03C 4/10; C03C 4/20**

(54) **FLACHGLAS, VERFAHREN ZU DESSEN HERSTELLUNG SOWIE DESSEN VERWENDUNG**

FLAT GLASS, METHOD FOR PRODUCING SAME AND ITS USE

VERRE PLAT, SON PROCÉDÉ DE FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2018 DE 102018112070**

(43) Veröffentlichungstag der Anmeldung:
**20.11.2019 Patentblatt 2019/47**

(73) Patentinhaber: **SCHOTT AG**
**55122 Mainz (DE)**

(72) Erfinder:
• **Lautenschläger, Gerhard**
**07743 Jena (DE)**
• **Krieg, Andreas**
**07743 Jena (DE)**
• **Voitsch, Andreas**
**07745 Jena (DE)**
• **Engel, Axel**
**55218 Ingelheim (DE)**
• **Pitzel, Christian**
**07749 Jena (DE)**
• **Schmidt, Matthias**
**07749 Jena (DE)**
• **Kloss, Thomas**
**07751 Jena/Cospeda (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**DE-A1-102015 113 558**

**Beschreibung**

Die Erfindung betrifft ein Flachglas, vorzugsweise ein Flachglas mit einer hohen Transmission für elektromagnetische Strahlung im Wellenlängenbereich von 200 nm bis 1500 nm.

Stand der Technik

Die Werkstoffklasse der Gläser ist seit langem bekannt.

Auch Flachgläser gehören seit vielen Jahren zum Stand der Technik. Ein Flachglas bezeichnet allgemein ein flaches, insbesondere scheiben- oder bandförmig ausgebildetes Glas. Bekannte Herstellungsverfahren für Flachglas sind beispielsweise das Floatverfahren, Walzen oder auch Ziehen.

In der Klasse der Gläser sind insbesondere die Borosilikatgläser von besonderer Bedeutung. So werden sie aufgrund ihrer besonderen Eigenschaften wie beispielsweise einer geringen Anfälligkeit gegenüber Temperaturwechseln, einer hohen chemischen Resistenz gegenüber einer Vielzahl von Reagenzien sowie ihrer guten Formstabilität auch bei hohen Temperaturen in einer Vielzahl von Anwendungen eingesetzt. Insbesondere ist es in diesem Glassystem möglich, bestimmte Eigenschaften, wie eine besonders hohe Transmission des Materials, in einem bestimmten Wellenlängenbereich, beispielsweise im NIR-Bereich von etwa 850 nm bis etwa 1500 nm Wellenlänge, zu realisieren. Aufgrund der vielfältigen Möglichkeiten, die Eigenschaften des Glases einzustellen, sind daher eine Reihe von Anwendungen und Zusammensetzungen von Borosilikatgläsern bekannt.

Die internationale Patentanmeldung WO 2012/146860 A1 betrifft die Verwendung eines Borosilikatglases für Induktionsanwendungen. Beschrieben wird hierbei sowohl die Verwendung eines Alkaliborosilikatglases als auch die Verwendung eines alkalifreien Borosilikatglases. Vorteilhaft erscheint die Verwendung von Borosilikatglas insbesondere deshalb, weil das Material bei geringen thermischen Ausdehnungskoeffizienten, insbesondere Ausdehnungskoeffizienten von $5,0 * 10^{-6}$/K, thermisch vorspannbar ist und auf diese Weise Glasscheiben mit ausreichender Härte und Festigkeit für die Anwendung als Kochfläche erhalten werden.

Weiterhin beschreibt die deutsche Patentanmeldung DE 4325656 A1 Brandschutzverglasungen der Brandschutzklasse G, bei welchen Alkaliborosilikatgläser thermisch hoch vorgespannt werden. Der thermische Ausdehnungskoeffizient (auch Wärmeausdehnungskoeffizient WAK bzw. englisch coefficient of thermal expansion, CTE) beträgt beispielsweise für diese Gläser $4 * 10^{-6}$/K. Die Gläser weisen alle einen relativ hohen Gehalt an Erdalkalioxiden sowie an ZnO und $ZrO_2$ auf, der zwischen 6 Gew.-% und 10 Gew.-% liegt.

Die deutsche Offenlegungsschrift DE 101 50 884 A1 beschreibt ein Alkaliborosilikatglas, das thermisch gut vorspannbar ist. Es weist einen thermischen Ausdehnungskoeffizienten von beispielsweise $4*10^{-6}$/K auf und umfasst auch das Erdalkalioxid CaO.

In der US 2017/0247284 A1 sind Borosilikatgläser für infrarote Anwendungen wie beispielsweise Heizerabdeckungen beschrieben. Die dort genannten Beispiele für Ausführungsformen von Gläsern 1 bis 10 sind alkalifreie Erdalkaliborosilikatgläser. Demgegenüber werden in Beispielen 11 bis 13 der US 2017/0247284 A1 die Glaskeramik Neoceram, ein Borosilikatglas vom "Pyrex"-Typ sowie ein alkalifreies Borosilikatglas für TFT-Anwendungen angeführt.

Die US-amerikanische Patentschrift US 9,145,333 B1 beschreibt Zusammensetzungen für Alkaliborosilikatgläser, die für das chemische Vorspannen optimiert sind, also beispielsweise hinsichtlich des Diffusionskoeffizienten, des Compressive Stress (also der Druckspannung an der Glasoberfläche) usw.

Alkaliborosilikatgläser finden weiterhin auch als Trägersubstrat für beispielsweise sogenannte Bioslides oder Mikroarrays Verwendung. Beispielshaft beschreibt die europäische Patentschrift EP 1 446 362 B1 ein derartiges Glas. Dieses Glas weist eine niedrige Eigenfluoreszenz und eine gute UV-Transparenz auf. Bezüglich des Gehalts an färbenden Ionen sind nur Grenzen für den $Fe_2O_3$-Gehalt (von weniger als 150 ppm), von oktaedrisch gebundenem $Fe^{3+}$ von weniger als 10 ppm und von $Cr^{3+}$ mit weniger als 10 ppm, und vorzugsweise sogar weniger als 2 ppm angegeben. Andere färbende Elemente, insbesondere die Übergangsmetalle der 3. Periode (also mit den Ordnungsnummern von 21 bis 30, hier insbesondere die Metalle von Titan bis Kupfer), sind hier nicht limitiert. Damit lassen sich aber keine Gläser mit einer hohen Lichttransmission im gesamten Wellenlängenbereich von 200 nm bis 1500 nm Wellenlänge realisieren.

Im Rahmen der vorliegenden Erfindung werden die Übergangsmetalle der 3. Periode des Periodensystems auch kurz als "3d-Elemente" oder "3d-Metalle" bezeichnet. Übergangsmetalle sind im Rahmen der vorliegenden Erfindung die Metalle der Ordnungszahlen 21 bis 30, 39 bis 48, 57 bis 80 sowie 89 und 104 bis 112.

Die deutsche Offenlegungsschrift DE 10 2014 119 594 A1 betrifft ein Borosilikatglas mit niedriger Sprödigkeit und hoher intrinsischer Festigkeit sowie dessen Herstellung und Verwendung. Optische Eigenschaften wie die Lichttransmission, die Brechzahl, die Fluoreszenz und die Solarisation oder Ähnliches werden weder beschrieben noch beansprucht. Entsprechend ist auch der Gehalt der Gläser an den sogenannten 3d-Elemente nicht beschrieben.

In der US-amerikanischen Patentanmeldung US 2017/0052311 A1 wird ein Glas für eine Lichtleiterplatte beschrieben. Es handelt sich dabei um eine Alkaliborosilikatglas, welches im Wellenlängenbereich von 400 nm bis 800 nm hoch lichtdurchlässig ist sowie frei von selektiver unerwünschter Lichtabsorption. Die lichttransmissionsmindernden Ionen der 3d-Elemente, wie beispielhaft Fe, Cr, Ni, Co, Cu, Mn, Ti und V, sollen in Summe einen Gehalt von maximal 50 ppm aufweisen. Jedoch ist eine Quantifizierung der einzelnen Elemente nicht vorgenommen und insbesondere ist hierbei nicht berücksichtigt, dass unterschiedliche Ionen unterschiedlich stark färben oder miteinander in Wechselwirkung treten können. Die Realisierung eines hochtransparenten Glases im gesamten Wellenlängenbereich von 200 nm bis 1500 nm ist damit mit den Gläsern, welche im Zusammensetzungsbereich der Glaszusammensetzungen der US 2017/0052311 A1 liegen, nicht möglich. Der Gehalt von zweiwertigem Eisen $Fe^{2+}$ soll in den Gläsern der US 2017/0052311 A1 im Vergleich zum Gesamtgehalt an Eisen möglichst gering sein.

Auch die US-amerikanische Patentanmeldung US 2017/0247285 A1 beschreibt Lichtleiterplatten aus Glas, wobei das Glas ein Hochalkali-Erdalkali-Borosilikatglas ist. Das Glas weist eine hohe Lichttransmission im Wellenlängenbereich von 380 nm bis 700 nm auf. Wegen der chemischen Vorspannbarkeit betragen die $Na_2O$-Gehalte mehr als 4 Mol-%. Die Gehalte an $B_2O_3$ liegen bei jeweils weniger als 10 Mol-%. Zwar werden die Gehalte einiger 3d-Elemente, wie beispielsweise von Co, Ni und Cr limitiert, jedoch werden andere 3d-Elemente gar nicht berücksichtigt, wie beispielsweise Cu, Mn, Ti und V. Das molare Verhältnis von $Al_2O_3$ und $Na_2O$ wird jeweils auf etwa 1 gesetzt, was darauf zurückzuführen ist, dass auf diese Weise eine besonders gute Vorspannbarkeit realisiert werden kann. Damit ist jedoch ein hoch lichtdurchlässiges Glas im gesamten Wellenlängenbereich von 200 nm bis 1500 nm nicht möglich.

Das japanische Patent JP 5540506 betrifft Alkaliborosilikatgläser, die eine gute UV-Transmission sowie eine gute Solarisationsbeständigkeit aufweisen. Der $SiO_2$Gehalt liegt hierbei bei höchstens 75 Gew.-%. In der Zusammensetzung dieser Gläser ist neben $SnO_2$ auch $Nb_2O_5$ sowie $As_2O_5$ enthalten. Der Gehalt an $Fe_2O_3$ beträgt zwischen 1 ppm und 50 ppm. Auch mit solchen Gläsern ist eine hohe Lichtdurchlässigkeit im gesamten Wellenlängenbereich von 200 nm bis 1500 nm nicht zu verwirklichen.

Die internationale Patentanmeldung WO 2017/070500 A1 beschreibt ein Glassubstrat für die Verwendung als Microarray für eine Fluoreszenz-Detektionsmethode, welche beispielsweise auch für Mikroskop-Trägergläser, Petrischalen oder sonstige Glass Slides, beispielsweise mit darauf oder darin eingebrachten Texturen geeignet sein können. Alle beschriebenen Glassubstrate weisen zwingend einen Gehalt an $B_2O_3$ auf. Die erhaltenen Ausdehnungskoeffizienten liegen zwischen 4,9 bis 8,0 * $10^{-6}$/K. Weiterhin umfassen die in der WO 2017/070500 A1 beschriebenen Gläser $SnO_2$.

Die internationale Patentanmeldung WO 2017/070066 A1 beschreibt die Herstellung von Lichtleiterplatten aus Glassubstraten, wobei die Gläser den in der internationalen Patentanmeldung WO 2017/070500 A1 entsprechen. Insbesondere liegen für die in der WO 2017/070066 A1 beschriebenen Glaszusammensetzungen die $SiO_2$-Gehalte zwischen 65,79 Mol-% und 78,17 Mol-% und die Gehalte an $B_2O_3$ betragen zwischen 0 und 11,16 Mol-%.

Die japanische Patentanmeldung JP 2010/208906 A betrifft ein Glas, welches stabil gegen UV-Strahlung mit einer Wellenlänge von 365 nm ist. Das Basisglas ist ein Kalk-Natron-Glas und weist kein $B_2O_3$ auf. Die Solarisation wird durch die Zugabe von $TiO_2$ in einem Gehalt von 0,2 Gew.-% bis 2,0 Gew.-%, einem Gehalt von Eisenoxid von 0,01 Gew.-% bis 0,015 Gew.-% sowie ein kontrolliert eingestelltes Redox-Verhältnis von $Fe^{2+}$/$Fe^{3+}$ verhindert.

Im US-amerikanischen Patent 4,298,389 werden Gläser mit hoher Transmission für solare Anwendungen beschrieben. Die optimierte solare Transmission betrifft hierbei den Wellenlängenbereich von 350 nm bis 2100 nm. Das Basisglas ist ein Alumino-Erdalkaliborosilikatglas mit $B_2O_3$-Gehalten von 2 Gew.-% bis 10 Gew.-%. Der Gehalt an $Fe_2O_3$ liegt bei 200 ppm, wobei alles Eisen in dreiwertiger Oxidationsstufe vorliegt. Die UV-Transmission ist daher extrem gering.

Ein Glas für die Anwendungen in Touch-Screens wird in der US-amerikanischen Patentanmeldung US 2014/0152914 A1 beschrieben. Es handelt sich dabei um ein Aluminosilikatglas, welches auch unter der Marke "Gorilla" bzw. dem Namen Gorilla Glas angeboten wird.

Eine hochtransmittierende Glasscheibe wird in der europäischen Patentanmeldung EP 2 261 183 A2 beschrieben. Das Glas weist eine Zusammensetzung auf, die $Na_2O$ und CaO sowie $SiO_2$ umfasst und $B_2O_3$-frei ist. Nach einer UV-Bestrahlung, also Bestrahlung mit einer Wellenlänge bis 400 nm, soll diese Scheibe keine Transmissionsminderung im sichtbaren Spektralbereich aufweisen.

DE 692 14 985 T2 betrifft eine Borosilikatglaszusammensetzung, die eine hohe spektrale Durchlässigkeit im sichtbaren Bereich, aber eine geringe UV-Durchlässigkeit haben soll. Solcherart zusammengesetzte Glasscheiben dienen insbesondere als Abdeckung für Galliumarsenid-Solarzellen. Das Borosilikatglas weist einen thermischen Ausdehnungskoeffizienten von 6,4 - 7,0 * $10^{-6}$/K auf. Als UV-Blocker wird $CeO_2$ verwendet.

Die deutsche Patentschrift DE 43 38 128 C1 beschreibt Borosilikatgläser, die eine hohe Transmission im UV-Bereich aufweisen sowie einen niedrigen thermischen Ausdehnungskoeffizienten im Bereich von 3,2 * $10^{-6}$/K und 3,4 * $10^{-6}$/K und eine hohe chemische Beständigkeit. Als Reduktionsmittel wird metallisches Silizium verwendet. Infolge dessen ist der Anteil von $Fe^{2+}$ gegenüber $Fe^{3+}$ hoch, was die Transmission im Nah-IR-Bereich verringert.

Weiterhin beschreibt die deutsche Patentschrift DE 43 35 204 C1 ein reduzierend erschmolzenes Borosilikatglas mit hoher Transmission im UV-Bereich (85% bei 254 nm und einer Dicke des Glases von 1 mm). Der $SiO_2$-Gehalt liegt zwischen 58 Gew.-% und 65 Gew.-% und der thermische Ausdehnungskoeffizient beträgt 5 - 6*$10^{-6}$/K. Als Reduktionsmittel in der Schmelze wurde Kohlenstoff verwendet.

Das deutsche Patent DE 38 01 840 A1 betrifft ein UV-durchlässiges Borosilikatglas, wobei als Reduktionsmittel Zucker und metallisches Aluminium verwendet werden, mit der Zusammensetzung 64 Gew.-% bis 66,5 Gew.-% $SiO_2$ und 20 Gew.-% bis 22,5 Gew.-% $B_2O_3$. Der thermische Ausdehnungskoeffizient beträgt zwischen $3,8 * 10^{-6}$/K und $4,5 * 10^{-6}$/K.

Die US-amerikanische Patentschrift US 4,925,814 beschreibt ein UV-durchlässiges Glas mit 60 Mol-% bis 70 Mol-% $SiO_2$ und 16 Mol-% bis 20 Mol-% $B_2O_3$. Der thermische Ausdehnungskoeffizient liegt im Bereich von $4,7 * 10^{-6}$/K bis $6,2 * 10^{-6}$/K.

Die deutsche Patentanmeldung DE 10 2009 021 115 A1 beschreibt Silikatgläser mit hoher Transmission im UV-Bereich. Die Gläser weisen einen $SiO_2$-Gehalt zwischen 65 Gew.-% und 77 Gew.-%, einen Gehalt an $B_2O_3$ zwischen 0,5 Gew.-% und 8 Gew.-% sowie weiterhin einen hohen Gehalt an Alkali- und Erdalkali-Ionen auf. Der thermische Ausdehnungskoeffizient beträgt zwischen $9 * 10^{-6}$/K und $10 * 10^{-6}$/K. Zur Reduzierung von dreiwertigem Eisen zu zweiwertigem Eisen wird Kohlenstoff oder metallisches Silizium zugegeben.

Ein solarisationsbeständiges Borosilikatglas ist beschrieben in der deutschen Patentschrift DE 10 2012 219 614 B4. Die Zusammensetzung dieses Glases weist 65 Gew.-% bis 85 Gew.-% $SiO_2$ sowie 7 Gew.-% bis 20 Gew.-% $B_2O_3$ auf. Die Solarisationsbeständigkeit wird erreicht durch eine definierte Lage der UV-Kante (5% Transmission bei ca. 280 nm, 0% Transmission bei 256 nm bei einer Dicke des Glases von 1,3 mm). Das Glas ist mithin nicht mehr durchlässig für UV-C-Strahlung. Die spezifische Lage der UV-Kante wird durch eine Kombination von $TiO_2$, $MoO_3$ und $V_2O_5$ erreicht.

Die deutsche Offenlegungsschrift DE 25 19 505 beschreibt ein UV-durchlässiges Borosilikatglas mit 61 Gew.-% bis 70 Gew.-% $SiO_2$ und 0,5 Gew.-% bis 3,5 Gew.-% $B_2O_3$. Wobei dem Glas ein organisches Reduktionsmittel zugesetzt wird. Das Glas zeigt nach UV-Bestrahlung wenig Solarisation.

In der deutschen Offenlegungsschrift DE 38 26 586 A1 werden UV-durchlässiges Alkali-Bor-Aluminosilikatgläser beschrieben. Der thermische Ausdehnungskoeffizient liegt im Bereich von $5,2 * 10^{-6}$/K bis $6,2 * 10^{-6}$/K, wobei der Gehalt an $SiO_2$ zwischen 58 Gew.-% und 62 Gew.-% und der Gehalt an $B_2O_3$ zwischen 15 Gew.-% und 18 Gew.-% beträgt. Die UV-Durchlässigkeit beträgt für ein Glas einer Dicke von 1 mm mindestens 80% bei einer Wellenlänge von 254 nm. Jedoch weisen die dort beschriebenen Gläser hohe thermische Ausdehnungskoeffizienten zwischen $5,6 * 10^{-6}$/K und $6,2 * 10^{-6}$/K auf.

Die internationale Patentanmeldung WO 2016/115685 A1 beschreibt Gläser mit niedrigem thermischen Ausdehnungskoeffizienten bei gleichzeitig hoher UV-Durchlässigkeit und Solarisationsbeständigkeit. Beschrieben werden zwei Glastypen, nämlich einerseits ein alkalifreies Erdalkaliborosilikatglas der Zusammensetzung 50 Mol-% bis 75 Mol-% $SiO_2$, 5 Mol-% bis 20 Mol-% $B_2O_3$ und einem Erdalkalioxidgehalt von 3 Mol-% bis 25 Mol-% sowie andererseits ein erdalkalifreies Alkaliborosilikatglas der Zusammensetzung 78 Mol-% bis 85 Mol-% $SiO_2$, 5 Mol-% bis 20 Mol-% $B_2O_3$ und einem Alkalioxidgehalt zwischen 0 Mol-% bis 13 Mol-%. Der thermische Ausdehnungskoeffizient liegt im Bereich zwischen $2 * 10^{-6}$/K und $4 * 10^{-6}$/K. Die UV-Transmission soll dabei verbessert werden durch eine Justierung der Anzahl der Nichtbrückensauerstoffatome, also durch eine Beeinflussung der Glasnetzwerkstruktur. Dabei wurde mit einem hochreinen Glas mit einem $Fe_2O_3$-Gehalt von weniger als 0,01 Mol-% eine Transmission von 51 % bei 248 nm und 88 % bei 308 nm erreicht. Jedoch zeigt sich im Vergleich der hochreinen Gläser mit solchen Gläsern, welche deutlich höhere Gehalte an $Fe_2O_3$ aufweisen, dass diese auch eine deutlich verringerte Transmission im UV-Bereich aufweisen, und zwar von 10% bei 248 nm sowie 61 % bei 308 nm. Anders als beschrieben scheint damit weniger die Anzahl der Nichtbrückensauerstoffe, sondern vielmehr der Gehalt an Verunreinigung, insbesondere in Form färbender Ionen, wie beispielsweise von Eisen-Ionen, für die UV-Transmission bestimmend zu sein. Dabei ist beachtlich, dass die beschriebene internationale Patentanmeldung keine Aussagen zum Gehalt an anderen färbenden Ionen, wie beispielsweise anderen 3d-Elementen, trifft.

In der internationalen Patentanmeldung WO 2017/119399 A1 werden drei unterschiedliche Glastypen vorgeschlagen, welche als im sichtbaren Spektralbereich mit Wellenlängen von 380 nm bis 780 nm hochtransmissiv beschrieben werden. Dabei handelt es sich bei dem beschrieben Glastyp A um ein hochalkalihaltiges Erdalkalialumosilikatglas, bei Glastyp B um ein hochalkalihaltiges Borosilikatglas und bei Glastyp C um ein alkalifreies Erdalkaliborosilikatglas. Ein niedriger Brechungsindex ist mit diesen Gläsern nicht realisierbar; die Beispielgläser in Tabelle 1 der internationalen Patentanmeldung WO 2017/119399 A1 weisen alle einen Brechungsindex von mehr als 1,5 auf.

Die internationale Patentanmeldung WO 2017/052338 A1 beschreibt eine Lichtleiterplatte aus Glas, welches eine Zusammensetzung von 75 Gew.-% bis 85 Gew.-% $SiO_2$, einen Gehalt von $B_2O_3$ von 5 Gew.-% bis 20 Gew.-%, zwischen 1 Gew.-% bis 5 Gew.-% $Al_2O_3$ und 3 Gew.-% bis 8 Gew.-% $R_2O$ aufweist, wobei R mindestens eines der Elemente Lithium, Natrium oder Kalium ist, sowie weniger als 0,0025 Gew.-% an $Fe_2O_3$ aufweist.

Die japanische Patentanmeldung JP 2010/208906 A schlägt eine Zusammensetzung für ein Glas vor, welches beständig gegen UV-Strahlung ist. Es handelt sich dabei um ein Kalk-Natron-Glas mit einer Zusammensetzung im Bereich von 66 Gew.-% bis 75 Gew.-% $SiO_2$, 0,1 Gew.-% bis 30 Gew.-% $Al_2O_3$, 5 Gew.-% bis 15 Gew.-% $Na_2O$, von 5 Gew.-% bis 15 Gew.-% $R_2O$ (wobei $R_2O$ die Summe von $Li_2O$, $Na_2O$ und $K_2O$ ist), von 3 Gew.-% bis 10 Gew.-% CaO, zwischen 0 Gew.-% und 7 Gew.-% MgO und einem Gehalt von RO zwischen 3 Gew.-% und 18 Gew.-% (wobei RO die Summe der Erdalkalioxide CaO, MgO, BaO und SrO ist), einem Anteil an Eisenoxiden FeO und $Fe_2O_3$ von in Summe

zwischen 0,005 Gew.-% und 0,02 Gew.-% sowie einem Gehalt an $TiO_2$ zwischen 0,2 Gew.-% und 2 Gew.-%.

In der japanischen Patentanmeldung JP 2015/193521 A werden hochtransmissive Borosilikatgläser aus dem Zusammensetzungsbereich von 50 Gew.-% bis 80 Gew.-% $SiO_2$, einem Gehalt zwischen 1 Gew.-% und 45 Gew.-% der Summe von $Al_2O_3$ und $B_2O_3$, einem Gehalt zwischen 0 Gew.-% und 25 Gew.-% der Summe von $Li_2O$, $Na_2O$ und $K_2O$ und einem Gehalt zwischen 0 Gew.-% und 25 Gew.-% der Summe von Erdalkalioxiden MgO, CaO, SrO und BaO beschrieben. Weiter soll die Summe der Gehalte von $Fe_2O_3$ und $TiO_2$ kleiner als 100 ppm sein. Die Beispielgläser weisen alle einen sehr niedrigen Gehalt von $SiO_2$ von etwa 65 Gew.-% auf bei einem gleichzeitig hohen Gehalt an Alkalioxiden zwischen ca. 8 Gew.-% und 13 Gew.-%. Es handelt sich entsprechend um hochdehnende Gläser mit einem thermischen Ausdehnungskoeffizienten zwischen ca. $5,5* 10^{-6}$/K und $7,5*10^{-6}$/K.

In der internationalen Patentanmeldung WO 2016/194780 A1 werden Borosilikatgläser mit hoher Transmission für elektromagnetische Strahlung speziell im DUV, also im Bereich von UV-C-Strahlung, beschrieben, welche aus folgendem Zusammensetzungsbereich kommen: $SiO_2$ zwischen 55 Mol-% und 80 Mol-%, $B_2O_3$ zwischen 12 Mol-% und 27 Mol-%, $Al_2O_3$ zwischen 0 Mol-% und 3,5 Mol-%, die Summe der Gehalte von $Li_2O$, $Na_2O$ und $K_2O$ zwischen 0 Mol-% und 20 Mol-% und einem Gehalt an Erdalkalioxiden RO zwischen 0 Mol-% und 5Mol-%. Die Beispielgläser sind alle hoch alkalihaltig und weisen thermische Ausdehnungskoeffizienten zwischen $4*10^{-6}$/K und $7*10^{-6}$/K auf.

Für moderne optische Applikationen werden an den Werkstoff Glas jedoch zunehmend komplexere Anforderungen gestellt. Anwendungsfelder für Gläser bestehen hierbei im Bereich des sogenannten UV-Curing, also dem Aushärten von organischen Beschichtungsmaterialien wie beispielsweise Lacken, durch energiereiche UV-Strahlung im Bereich von 200 nm bis 380 nm Wellenlänge, im LED-Bereich für LED im UV-Bereich, für welche UV-durchlässige, plane Glasabdeckungen benötigt werden, sowie als Fenster, Filter oder Verkapselungen, beispielsweise für NIR-Kameras bzw. Radar oder LiDAR-Anwendungen, wo eine hohe Durchlässigkeit für Strahlung im Bereich von 850 nm bis 1500 nm Wellenlänge notwendig ist. Auch Anwendungen, bei denen eine hohe Durchlässigkeit des Glasmaterials für Strahlung im sichtbaren Wellenlängenbereich erforderlich ist, also im Wellenlängenbereich von etwa 380 nm bis etwa 780 nm, sind von großer Bedeutung, und umfassen beispielsweise Abdeckungen für LED im Wellenlängenbereich des sichtbaren Lichts, hier insbesondere bei Wellenlängen zwischen 380 nm und 700 nm, sogenannte Light-Guide-Plates, oder beispielsweise für LEDbasiertes Licht-Management, insbesondere zur Erzeugung von homogenem weißen Licht, ohne dass es bei großformatigen Displays im sogenannten "Slim-Design" mit direkter Hinterleuchtung und/oder indirekter Lichteinstrahlung in der Kante zu einer Farbverschiebung kommt, wobei hier der gesamte Wellenlängenbereich des sichtbaren Lichts von etwa 380 nm und bis ca. 780 nm von besonderer Bedeutung ist.

Weitere Anwendungen betreffen beispielsweise sogenannte Micro-Arrays für die Diagnostik, wobei hier dünne Glassubstrate mit sehr geringer Eigenfluoreszenz und hoher Lichttransmission im Wellenlängenbereich von 380 nm bis 780 nm gefordert sind.

Als Trägerglas zur Herstellung von ultradünnen Halbleiterwafern aus Silicium ist ein Glas mit an Silicium angepasstem thermischen Ausdehnungskoeffizienten gefordert, bei welchem ein UV-Debonding bei etwa 254 nm durchgeführt werden kann.

Für Hochfrequenzanwendungen werden mikrowellendurchlässige Glassubstrate mit Transparenz für Strahlung im GHz-Bereich gebraucht, beispielsweise für neuartige Flach-Antennen mit geringem dielektrischen Verlustfaktor.

Aus diesen modernen und vielfach neuartigen Anwendungsgebieten für Glas ergeben sich folgende vorteilhafte Anforderungen an die Eigenschaften des zu verwendeten Glassubstrates:

- Hohe UV-Transparenz insbesondere im Wellenlängenbereich von 200 nm bis 300 nm
- Hohe Transparenz im Sichtbaren, also von 380 nm bis 780 nm
- Hohe Transparenz im Nahen Infrarot, also im Wellenlängenbereich von 780 nm bis 1500 nm
- Geringe Eigenfluoreszenz
- Hohe Solarisationsbeständigkeit
- Niedrige Lichtbrechung
- Niedriger thermische Ausdehnungskoeffizient
- Hohe chemische Beständigkeit und geringe Korrosionsneigung
- Minimale Alkali-Migration im Glas, insbesondere keine Alkaliabgabe an der Glasoberfläche
- Gute mechanische Stabilität und hohe Festigkeit gegen abrasiv wirkenden Angriff auf die Glasoberfläche durch verschiedene Medien
- Optimale dielektrische Eigenschaften: bei 1 MHz $\varepsilon \leq 5$, tan $\sigma \leq 50*10^{-4}$

Allen vorstehend genannten Gläsern ist jedoch gemein, dass diese lediglich Teilbereiche der genannten Anforderungen abdecken. So ist es, wie vorstehend erläutert, zwar möglich, durch eine gezielte Änderung der Glaszusammensetzung im Bereich der Borosilikatgläser Eigenschaften für spezifische Anwendungen, beispielsweise eine hohe Vorspannbarkeit bei hoher Transmission für elektromagnetische Strahlung im sogenannten optischen Spektralbereich (von ca. 380 nm bis ca. 800 nm Wellenlänge) zu optimieren, allerdings mit dem Nachteil, dass ein solcherart optimiertes Glas für eine andere Anwendung, beispielsweise mit hoher Transmission für Strahlung im UV-Bereich (von ca. 200 nm bis ca. 400 nm) bei gleichzeitig hoher Solarisationsbeständigkeit nicht geeignet ist. Werden wiederum Gläser mit relativ hoher UV-Transmission erhalten, weisen diese in der Regel sehr hohe thermische Ausdehnungskoeffizienten auf, was für Anwendungen im Bereich der Leiterplattenherstellung (Si-Debonding) unvorteilhaft ist. Anpassungen von Glaszusammensetzungen auf spezifische Anwendungen sind jedoch immer mit einem hohen Aufwand verbunden.

Eine Alternative zu den vorgenannten Gläsern könnte in der Verwendung von reinem Kieselglas $SiO_2$ liegen, welches beispielsweise über eine hohe UV-Durchlässigkeit und eine hohe chemische Beständigkeit verfügt. Der Verwendung von reinem Kieselglas sind jedoch dadurch Grenzen gesetzt, dass dieses Glas aufgrund der aufwändigen Herstellung sehr teuer ist. Weiterhin ist Kieselglas nicht als Flachglas herstellbar.

Somit besteht Bedarf an einem Flachglas mit einer hohen Transmission im Wellenlängenbereich von 200 nm bis 1500 nm, vorzugsweise insbesondere mit niedrigem thermischen Ausdehnungskoeffizienten, hoher chemischer Beständigkeit und mechanischer Festigkeit und niedriger Brechzahl, welches kostengünstig herstellbar ist.

Aufgabe der Erfindung

Die Aufgabe der Erfindung besteht in der Bereitstellung eines Flachglases, welches die Schwächen des Standes der Technik überwindet oder zumindest mindert.

Die Aufgabe der Erfindung wird gelöst durch den Gegenstand des unabhängigen Anspruchs 1.

Speziellere und bevorzugte Ausführungsformen finden sich in den abhängigen Ansprüchen. Die Erfindung betrifft mithin ein Flachglas, wobei die Transmission des Flachglases für elektromagnetische Strahlung bei einer Dicke des Flachglases von 1 mm bei einer Wellenlänge von 254 nm 20% oder mehr, bevorzugt 60 % oder mehr, besonders bevorzugt 85% oder mehr und ganz besonders bevorzugt 88 % oder mehr, und/oder bevorzugt bei einer Wellenlänge von 300 nm 82 % oder mehr, bevorzugt 90 % oder mehr, besonders bevorzugt 91% oder mehr, und/oder bevorzugt bei einer Wellenlänge von 350 nm 90 % oder mehr, bevorzugt 91% oder mehr, und/oder bevorzugt bei einer Wellenlänge von 546 nm 92% oder mehr, bevorzugt 92,5% oder mehr, und/oder bevorzugt bei einer Wellenlänge von 1400 nm 92,5% oder mehr, bevorzugt 93% oder mehr, und/oder bevorzugt im Wellenlängenbereich von 380 nm bis 780 nm 91,5 % oder mehr, bevorzugt 92 % oder mehr, und/oder bevorzugt im Wellenlängenbereich von 780 nm bis 1500 nm 92,5% oder mehr, bevorzugt 93% oder mehr, beträgt.

Im Rahmen der Erfindung liegen auch dickere oder dünnere Flachgläser, wenn diese dickeren oder dünneren Flachgläser auch bei 1 mm Dicke die Werte der unabhängigen Ansprüche erfüllen.

Dickere Flachgläser können zur Feststellung, ob diese im Schutzbereich liegen, auf eine Dicke von 1 mm ausgedünnt werden.

Dünnere Flachgläser können durch Stapelung und eventuell nötige Ausdünnung auch auf eine Dicke von 1 mm gebracht werden, sodass an Stelle der Umrechnung auch eine physikalische Messung der Transmission vorgenommen werden kann, um zu bestimmen, ob diese dünneren Flachgläser im Schutzumfang liegen.

Das Flachglas gemäß der vorliegenden Erfindung weist damit eine breitbandig hohe Durchlässigkeit für elektromagnetische Wellenlängen im Wellenlängenbereich von 200 nm bis 1500 nm auf.

Im Rahmen der vorliegenden Erfindung gelten folgende Definitionen:

Unter einem Flachglas wird im Sinne der vorliegenden Erfindung ein Glaskörper verstanden, dessen geometrische Abmessung in einer Raumrichtung mindestens eine Größenordnung geringer ist als in den beiden anderen Raumrichtungen. Vereinfacht gesprochen ist also die Dicke des Glaskörpers also mindestens eine Größenordnung geringer als dessen Länge und Breite. Flachgläser können beispielsweise bandförmig ausgestaltet sein, sodass also ihre Länge nochmals deutlich größer ist als ihre Breite, oder Länge und Breite können in etwa dieselbe Größenordnung aufweisen, sodass das Flachglas mithin als Scheibe vorliegt.

Insbesondere wird unter einem Flachglas ein Glas verstanden, welches aus dem Herstellungsprozess selbst bereits als scheiben- oder bandförmig ausgebildeter Körper erhalten wird. Nicht jeder scheiben- oder bandförmig ausgebildete Glaskörper ist mithin als Flachglas im Sinne der vorliegenden Erfindung zu verstehen. Beispielsweise ist es auch möglich, eine Glasscheibe aus einem Glasblock durch Schneiden und anschließendes Schleifen und/oder Polieren heraus zu präparieren. Insbesondere wird ein Flachglas im Rahmen der vorliegenden Offenbarung erhalten in einem Schmelzprozess mit anschließender Heißformgebung, insbesondere in einem Walzverfahren, einem Floatverfahren oder einem Ziehverfahren, wie einem Down-Draw-Verfahren, vorzugsweise einem Overflow-Fusion-Down-Draw-Verfahren, oder einem Up-Draw-Verfahren oder einem Foucault-Verfahren. Die Oberfläche des Flachglases kann feuerpoliert vorliegen oder aber auch nach dem Heißformgebungsprozess in einem Kaltnachverarbeitungsschritt nachbehandelt sein. Die Oberflächencharakteristik des Flachglases unterscheidet sich dabei je nach dem gewählten Heißformgebungsverfahren.

Sofern im Rahmen der vorliegenden Anmeldung auf den thermischen Ausdehnungskoeffizienten Bezug genommen wird, handelt es sich dabei, sofern nicht ausdrücklich anders angegeben, um den linearen thermischen Ausdehnungskoeffizienten $\alpha$. Dieser ist dabei, sofern nicht ausdrücklich anders vermerkt, im Bereich von 20°C bis 300 °C angeben. Die Bezeichnungen CTE, WAK, $\alpha$ sowie $\alpha_{20-300}$ und weiterhin allgemein "thermischer Ausdehnungskoeffizient" werden im Rahmen der vorliegenden Erfindung synonym verwendet. Beim angegeben Wert handelt es sich um den nominalen mittleren thermischen Ausdehnungskoeffizienten gemäß ISO 7991, welcher in statischer Messung bestimmt ist.

Die Transformationstemperatur $T_g$ ist bestimmt durch den Schnittpunkt der Tangenten an die beiden Äste der Ausdehnungskurve beim Messung mit einer Heizrate von 5K/min. Dies entspricht einer Messung nach ISO 7884-8 bzw. DIN 52324.

Nach der vorliegenden Erfindung ist somit das Flachglas also ein flacher, scheiben- oder bandförmiger Glaskörper, welcher insbesondere native Oberflächen aufweisen kann. Als Oberflächen des Flachglases werden dabei im Rahmen der vorliegenden Erfindung die beiden prinzipiellen Flächen des Glaskörpers bezeichnet, also diejenigen Flächen, welche durch die Länge und die Breite des Glaskörpers bestimmt sind. Nicht als Oberflächen in diesem Sinne sind die Kantenflächen zu verstehen. Diese machen zum einen nur einen sehr geringen Flächenanteil des Flachglaskörpers auf, zum anderen werden Flachglaskörper aus dem aus dem Fertigungsprozess erhaltenen Flachglaskörper, also in der Regel einem Glasband, auf entsprechende, sich aus Kunden- oder Produktionsvorgaben ergebende Größen zugeschnitten.

Das Vorliegen des Glases als Flachglas gemäß der vorliegenden Erfindung hat weitreichende Vorteile. So entfallen aufwändige Präparationsschritte, die nicht nur zeit-, sondern auch kostenintensiv sind. Auch sind durch die üblichen Verfahren zur Herstellung von Flachglas zugänglichen Geometrien, insbesondere also große Abmessungen des Flachglases, leicht zugänglich. Darüber hinaus sind native Oberflächen eines Glases, welche auch als feuerpoliert bezeichnet werden, bestimmend beispielsweise für die mechanischen Eigenschaften des Glaskörpers, wobei eine Nachbearbeitung der Oberfläche eines Glases zumeist einen erheblichen Festigkeitsverlust mit sich führt. Das Flachglas gemäß der vorliegenden Erfindung verfügt somit vorzugsweise über eine Festigkeit, welche im Vergleich zu nachbearbeiteten Gläsern höher ist.

Das Flachglas gemäß der vorliegenden Erfindung weist, wie vorstehend bereits dargestellt, eine breitbandig hohe Transmission für elektromagnetische Strahlung im gesamten Wellenlängenbereich von 200 nm bis 1500 nm auf und erreicht damit ein Transmissionsniveau, welches in dieser Qualität bislang lediglich mit optischen Gläsern erzielt werden konnte. Jedoch verfügt das Flachglas gemäß der Erfindung über eine gegenüber diesen optischen Gläsern, insbesondere gegenüber Kieselglas, deutlich verbesserte Schmelzbarkeit insbesondere in kontinuierlichen Schmelzaggregaten, sodass die Bereitstellung eines Glases mit breitbandiger Transmission für elektromagnetische Strahlung im gesamten Wellenlängenbereich von 200 nm bis 1500 nm erstmals als Flachglas möglich ist, und zwar sowohl technologisch als auch wirtschaftlich.

Um eine gute Schmelzbarkeit, mithin eine wirtschaftliche Produktion, des Flachglases zu gewährleisten, beträgt die Summe des Gehalts des Flachglases an Oxiden von Netzwerkbildnern, insbesondere an Oxiden von Silicium und/oder Bor, gemäß einer Ausführungsform höchstens 98 Mol-%.

Ein hoher Gehalt des Flachglases gemäß Ausführungsformen der Erfindung an Netzwerkbildnern, insbesondere $SiO_2$ und/oder $B_2O_3$, sorgt dabei dafür, dass die guten Transmissionseigenschaften des Flachglases überhaupt erreicht werden können. Wie vorstehend bereits ausgeführt, zeigt reines Kieselglas (auch als Quarzglas bezeichnet), $SiO_2$, breitbandig eine sehr hohe Transmission für elektromagnetische Strahlung. Jedoch ist eine Schmelze aus reinem $SiO_2$ technologisch nicht darstellbar.

Netzwerkbildner werden hierbei im Sinne von Zachariasen verstanden, umfassen also Kationen, welche überwiegend die Koordinationszahl 3 oder 4 aufweisen; insbesondere handelt es sich hierbei um die Kationen der Elemente Si, B, P, Ge. Netzwerkbildner stehen hierbei im Gegensatz zu Netzwerkwandlern wie beispielsweise Na, K, Ca, Ba mit üblichen Koordinationszahlen von 6 und mehr, sowie Zwischenoxiden wie Al, Mg, Zn, welche vorwiegend Oxidationszahlen von 4 bis 6 aufweisen.

Weiterhin ist bekannt, dass bereits kleine Mengen an Verunreinigungen die Transmissionseigenschaften von Kieselglas drastisch beeinflussen, nämlich verschlechtern. Überraschenderweise hat sich jedoch gezeigt, dass bereits mit einem maximalen Gehalt an Netzwerkbildnern von 98 Mol-% dennoch die vorstehend erläuterten vorteilhaften Transmissionseigenschaften für Flachglas realisierbar sind.

Vorteilhaft beträgt gemäß einer Ausführungsform der lineare thermische Ausdehnungskoeffizient $\alpha$ des Flachglases zwischen $2,4 * 10^{-6}/K$ und $3,5 * 10^{-6}/K$.

Ein solcher Wert des linearen thermischen Ausdehnungskoeffizienten $\alpha$ ist vorteilhaft, da auf diese Weise eine bessere Anpassung des thermischen Ausdehnungskoeffizienten beispielsweise an das in der Leiterplattenindustrie häufig verwendete Silizium möglich ist. Bei einer Verwendung beispielsweise von Quarzglas, welches einen sehr niedrigen thermischen Ausdehnungskoeffizienten von lediglich $0,5 * 10^{-6}/K$ aufweist, kann es hier bei Temperaturwechselbelastungen zum Reißen auf das Substrat aus Quarzglas aufgebrachter Schichten aus Silizium kommen. Dies ist bei Flachglas gemäß dieser Ausführungsform durch den vorteilhaften linearen thermischen Ausdehnungskoeffizienten deutlich reduziert.

Gemäß einer weiteren Ausführungsform des Flachglases beträgt der Gehalt des Flachglases an $SiO_2$ zwischen

72 Mol-% und 85 Mol-%, vorzugsweise zwischen 76 Mol-% und 85 Mol-%.

Dies ist deshalb besonders vorteilhaft, da auf diese Weise nochmals die Schmelzbarkeit des Flachglases verbessert wird. Jedoch sollte der Gehalt des Flachglases an $SiO_2$ nicht zu gering sein, insbesondere nicht geringer als 72 Mol-%, vorteilhaft nicht geringer als 76 Mol-%.

Dem Fachmann ist bekannt, dass einfache farblose Grundglassysteme, wie beispielsweise Kieselglas (auch Quarzglas) $SiO_2$, aber auch reines Boratglas $B_2O_3$ (sowie hypothetisches reines Phosphatglas $P_2O_5$, welches wegen der hohen Hygroskopizität von Phosphoroxid nicht darstellbar ist), sehr hohe Durchlässigkeit für Strahlung im UV-Bereich aufweisen. In der Regel werden die Gläser hinsichtlich ihrer Transmissionseigenschaften durch die Lage der Absorptionskante, beispielsweise der sogenannten UV-Absorptionskante, beschrieben. Die Lage der Absorptionskante wird in der Regel durch die Angabe der Wellenlänge $\lambda_0$ charakterisiert. Bei der Wellenlänge $\lambda_0$ zur Charakterisierung der UV-Absorptionskante handelt es sich um den Wellenlängenwert, den man durch geradlinige Extrapolation des steil abfallenden Teils der Transmissionskurve zum Schnittpunkt mit der $\lambda$-Koordinate erhält. Im Folgenden sind die Werte für $\lambda_0$ in nm für einige farblose Grundgläser angegeben:

| | |
|---|---|
| $SiO_2$: | $\lambda_0 = 162$ nm |
| $B_2O_3$: | $\lambda_0 = 200$ nm |
| $HPO_3$: | $\lambda_0 = 273$ nm |

Theoretisch den kleinsten Wert für die Absorptionskante sollte reines Phosphatglas der Zusammensetzung $P_2O_5$ aufweisen, welches sich jedoch, wie vorstehend ausgeführt, nicht darstellen lässt. Der Einbau von Wasser in Glas führt zu einer Verschiebung der hier betrachteten UV-Absorptionskante hin zu höheren Wellenlängen. Auch ein wasserfreies $B_2O_3$-Glas ist schwierig herzustellen, so dass reines wasserfreies Kieselglas die höchste UV-Durchlässigkeit alles Glassysteme aufweist. Wie bereits ausgeführt, ist dieses als Flachglas weder ökonomisch noch technologisch darstellbar.

Eine weitere Verschiebung der $SiO_2$ oder $B_2O_3$-Grundglaskurve ins langwellige UV-Gebiet ergibt sich, wenn in die Grundgläser $SiO_2$ oder $B_2O_3$ weitere Oxide, beispielsweise Alkali- oder Erdalkalioxide (auch als basische Oxide bezeichnet), eingebaut werden. Durch den Einbau dieser Oxide werden in der Glasstruktur sogenannte Trennstellen-Sauerstoffionen erzeugt (diese werden auch als "Non-Bridging Oxygens" oder kurz als NBO bezeichnet). Für die Verschiebung der Absorptionskante durch den Einbau eines Metalloxids $Me_xO_y$ gilt beispielhaft die folgende Abschätzung:

| | |
|---|---|
| $SiO_2 + Me_xO_y$ | Verschiebung von $\lambda_0$ von 162 nm auf etwa 270 nm |
| $B_2O_3 + Me_xO_y$ | Verschiebung von $\lambda_0$ von 200 nm auf etwa 360 nm |

"Me" bezeichnet dabei ein Metall, welches in Oxiden üblicherweise die Oxidationszahl y aufweist. In welchem genauem Umfang es tatsächlich zu einer Verschiebung der Absorptionskante, hier also der UV-Absorptionskante, kommt, ist dabei abhängig von der Natur des Metalls, also beispielsweise davon, ob es sich dabei um ein Alkalimetall oder ein Erdalkalimetall handelt, sowie wiederum für den beispielhaften Fall von Alkalioxiden, ob konkret beispielsweise $Na_2O$ oder $K_2O$ in das Grundglas eingebaut wurde.

Die UV-Absorption der oxidischen Gläser erfolgt vorrangig durch die Elektronen der Sauerstoffionen, welche von der elektromagnetischen Strahlung angeregt werden. Fest gebundene Sauerstoffionen brauchen zu ihrer Anregung sehr energiereiche kurzwellige Strahlung, wohingegen für weniger feste Sauerstoffbindungen, insbesondere solche, welche auch durch das Vorhandensein der Trennstellen-Sauerstoffionen (Nicht-Brücken-Sauerstoff, NBO) bedingt, bereits durch weniger energiereiche, langwellige UV-Strahlung angeregt werden.

Gemäß einer Ausführungsform der Erfindung umfasst das Flachglas $B_2O_3$, wobei vorzugsweise der Gehalt des Flachglases an $B_2O_3$ zwischen 10 Mol-% und 25 Mol-%, insbesondere vorzugsweise zwischen 10 Mol-% und 22 Mol-%, beträgt. $B_2O_3$ als reines Boratglas weist zwar eine hinsichtlich der Transmissionseigenschaften ungünstigere Lage der UV-Absorptionskante auf, bringt jedoch den Vorteil mit sich, dass es einen weniger hohen Schmelzpunkt als $SiO_2$ aufweist. Ein zu hoher Gehalt an $B_2O_3$ ist jedoch sowohl wegen der Hygroskopizität von $B_2O_3$ als auch wegen dessen Neigung, aus Schmelzen abzudampfen, ungünstig.

Wie vorstehend ausgeführt, ist reines Kieselglas hinsichtlich der Transmissionseigenschaften eines Glases besonders vorteilhaft, allerdings aus technologischen und wirtschaftlichen Gründen nicht als Flachglas herstellbar. Wenn also, beispielsweise aus Gründen der technologischen und/oder wirtschaftlichen Darstellbarkeit eines Flachglases, die Summe des Gehalts an Oxiden von Netzwerkbildnern im Flachglas gemäß Ausführungsformen der Erfindung beschränkt ist, also nicht mehr als 98 Mol-%, dabei vorzugsweise nicht mehr als 85 Mol-%, beträgt, sind die weiteren Komponenten des Flachglases von besonderer Bedeutung.

Gemäß einer weiteren Ausführungsform der Erfindung umfasst daher das Flachglas $SiO_2$ und $B_2O_3$.

Zwar ist es praktisch möglich, $SiO_2$ und $B_2O_3$ in fast jeder beliebigen Mischung zusammen mit anderen Kationen, insbesondere "basischen" Kationen wie beispielsweise $Na^+$, $K^+$, $Li^+$, $Ca^{2+}$, als Glas zu erhalten. Soll jedoch ein Glas, insbesondere beispielsweise ein Flachglas, besonders mit besonders hoher Transmission für elektromagnetische Strahlung im gesamten Wellenlängenbereich von 200 nm bis 1500 nm erhalten werden, ist neben den durch die Produktionsbedingungen rein praktisch gegebenen Grenzen, beispielsweise hinsichtlich der Entglasungsneigung, der Schmelzbarkeit und/oder der Formbarkeit sowie der chemischen Beständigkeit beachtlich, dass besonders vorteilhafte optische Eigenschaften durch einen hohen Summenanteil der Oxide $SiO_2$ und $B_2O_3$ erhalten werden.

Vorzugsweise umfasst daher das Flachglas $SiO_2$ und $B_2O_3$, und es gilt insbesondere vorzugsweise, dass

$$\Sigma(SiO_2 + B_2O_3) \quad 92 \text{ Mol-\%} - 98 \text{ Mol\%}$$

Vorzugsweise ist der Gehalt an Alkalioxiden im Flachglas minimiert. Gemäß einer Ausführungsform der Erfindung gilt:

$$\Sigma\, R_2O \quad 1 \text{ Mol-\%} - 5 \text{ Mol-\%, wobei } R_2O \text{ für Alkalimetalloxide steht.}$$

Für besonders vorteilhafte Eigenschaften des Flachglases, insbesondere für eine besonders günstige Lage der UV-Absorptionskante (also für ein möglichst geringes $\lambda_0$), ist das molare Verhältnis der vom Glas umfassten Komponenten zueinander entscheidend.

Gemäß einer weiteren Ausführungsform gilt hinsichtlich des Verhältnisses der Stoffmengen der Komponenten des Flachglases:

$$B_2O_3/SiO_2 \quad 0,12 \text{ bis } 0,35, \text{ und/oder}$$
$$\Sigma(Me_xO_y)/(\Sigma(SiO_2+B_2O_3) \quad 0,02 \text{ bis } 0,10,$$

wobei Me steht für ein Metall, welches in Oxiden üblicherweise die Oxidationszahl y aufweist, insbesondere für ein Alkali- und/oder Erdalkalimetall sowie für Aluminium.

Mit anderen Worten ist die Summe aller Metalloxide im Flachglas gemäß einer Ausführungsform minimiert und klein gegenüber der Summe der Hauptkomponenten.

"Me" bezeichnet hierbei ein Metall, welches in Oxiden üblicherweise mit der Oxidationszahl y vorliegt. Insbesondere kann Me ein Alkali- oder ein Erdalkalimetall sein oder beispielsweise auch Aluminium. Selbstverständlich ist es möglich, dass die Glaszusammensetzung auch mehrere Metallionen "Me" umfasst. Der Begriff "Metallion" ist hierbei unabhängig von der Oxidationszahl zu verstehen, sodass der betreffende Stoff beispielsweise auch metallisch, aber insbesondere auch als Ion oder in Oxidform vom Flachglas umfasst sein kann. In der Regel werden Metalle in den hier betrachteten oxidischen Gläsern als Ionen vorliegen. Auch ist zu berücksichtigen, dass insbesondere bei den Übergangsmetallen unterschiedliche Oxidationsstufen bei den Ionen auftreten (sogenannte polyvalente Ionen). In diesem Sinne ist unter dem Begriff der "üblichen Oxidationszahl" diejenige zu verstehen, mit welcher ein entsprechendes Oxid üblicherweise, beispielsweise in der Angabe in einer Analyse einer Zusammensetzung, angegeben oder bezeichnet wird. Beispielsweise erfolgt die Angabe des Gehalts eines Glases, beispielsweise eines Flachglases, an Chrom üblicherweise als prozentuale Angabe von $Cr_2O_3$ (also mit Chrom mit der Oxidationszahl 3), auch wenn durchaus andere Oxidationszahlen möglich sind. Sofern dies nicht ausdrücklich anders angegeben ist, wird im Rahmen der vorliegenden Erfindung stets der Gesamtgehalt eines Stoffes, unabhängig von der Oxidationsstufe, bezeichnet.

Ein molares Verhältnis von $B_2O_3$ zu $SiO_2$ in den Grenzen von 0,12 bis 0,35 ist insbesondere vorteilhaft, weil auf diese Weise strukturelle Inhomogenitäten, wie sie beispielsweise durch Entmischungsprozesse entstehen können, welche im System $SiO_2$-$B_2O_3$, ebenso wie auch in ternären Systemen, welche neben $SiO_2$ und $B_2O_3$ noch ein weiteres Metalloxid $Me_xO_y$ umfassen, verhindert oder zumindest minimiert werden können. Auch strukturelle Inhomogenitäten, welche durch Entmischungsprozesse in Form von Mikrophasentrennung in einem Glas, beispielsweise einem Flachglas auftreten können, tragen nämlich insbesondere durch Lichtstreuung zur UV-Absorption bei.

Gemäß der Erfindung gilt für die Gewichtsanteile der vom Flachglas umfassten Eisen-Ionen:

$$0,1 \leq Fe^{2+}/(Fe^{2+}+Fe^{3+}) \leq 0,3.$$

Dieser Wert wird auch als Redox-Verhältnis bezeichnet.

Mit anderen Worten beträgt der Gehalt (bezogen auf die Masse) von zweiwertigem Eisen im Flachglas zwischen mindestens 10% und höchstens 30%, bezogen auf die Summe der vom Flachglas umfassten Eisenionen.

Bei Eisen handelt es sich um eine unvermeidliche, aus den Produktionsrohstoffen resultierende Verunreinigung. Dabei stellt Eisen in der Regel die Hauptverunreinigung dar, d.h. andere Verunreinigungen sind üblicherweise in geringerer Menge vom Glas, beispielsweise einem Flachglas, umfasst.

Überraschenderweise hat sich gezeigt, dass mit einem Redox-Verhältnis für Eisen in den oben angegebenen Grenzen besonders vorteilhafte Transmissionseigenschaften, insbesondere eine besonders hohe Transmission des Flachglases für elektromagnetische Strahlung im gesamten Wellenlängenbereich von 200 nm bis 1500 nm, erzielt werden.

Dass die vorteilhaften hohen Transmissionseigenschaften für elektromagnetische Strahlung gerade mit einem solchen Redox-Verhältnis erzielt werden, überrascht dabei insbesondere, da man bisher den Gehalt an zweiwertigem Eisen möglichst minimiert hat. Beispielsweise war für Glas nach der US 2017/0052311 A1 das Redox-Verhältnis möglichst kleiner als 5% als besonders bevorzugt angegeben worden. Das genau eingestellte Redox-Verhältnis in den oben angegebenen Grenzen ermöglicht jedoch einen optimalen Kompromiss, sodass sowohl hohe Transmission für UV-Strahlung als auch im sichtbaren und im Nah-IR-Bereich des elektromagnetischen Spektrums für ein Flachglas nunmehr verwirklicht werden können.

Gemäß der Erfindung ist der Gehalt des Flachglases an polyvalenten Metallionen, beispielsweise an Ionen der sogenannten Übergangsmetalle, spezifisch minimiert.

Es ist bekannt, dass insbesondere polyvalente Metallionen, beispielsweise Ionen der sogenannten Übergangsmetalle, ein Glas färben können. Eine direkte Anwendung der Ligandenfeldtheorie auf ein Glas, welches färbende Ionen umfasst, ist zwar nicht möglich, jedoch kann eine analoge Anwendung der Grundsätze der Ligandenfeldtheorie auf Ionen umfassende Gläser vorgenommen werden. Jedoch ist hierbei zusätzlich zu berücksichtigen, dass auch das Grundglas einen wesentlichen Einfluss auf die resultierende Färbung hat, ebenso wie weitere, vom Glas umfasste Komponenten, wie beispielsweise Art und Konzentration möglicher vom Glas umfasster sogenannter Netzwerkwandler. Die Absorptionsverhältnisse in einem Glas sind daher schwer vorhersagbar und Verallgemeinerungen sind nur begrenzt zulässig.

Dem Erfinder ist es nunmehr gelungen, zumindest für Alkaliborosilikatglas mit niedrigem Gehalt an Alkalien eine Bestimmung der Färbungs- oder Absorptionskraft bzw. allgemeiner des Absorptionsverhaltens im Wellenlängenbereich von 200 nm bis ca. 1500 nm von unterschiedlichen, in Gläsern häufig beispielsweise als Verunreinigungen präsenten Metallen bzw. Elementen bzw. deren Ionen, wie beispielsweise von Übergangsmetallen bzw. deren Ionen, vorzunehmen. Bei diesen häufig von Gläsern umfassten Übergangsmetallen bzw. deren Ionen handelt es sich insbesondere um die Übergangsmetalle der 3. Periode des Periodensystems (sogenannte 3d-Elemente), insbesondere um $Fe^{2+/3+}$, $Co^{2+}$, $Ni^{2+}$, $Cr^{3+}$, $Cu^{2+}$, $Mn^{2+}$, $V^{5+}$ sowie $Ti^{4+}$. Wie bereits weiter oben ausgeführt, erfolgt hierbei die Angabe der Oxidationszahl bzw. der Wertigkeit der Ionen mit den üblicherweise für das betreffende Element angegebenen Oxidationszahlen. Insbesondere die Übergangsmetalle sind polyvalente Ionen, die relativ leicht von einer Oxidationsstufe in eine andere wechseln und in unterschiedlichen Oxidationsstufen, teilweise sogar in zahlreichen unterschiedlichen Oxidationsstufen, vorliegen können, wie dies insbesondere für Mangan und Chrom bekannt ist. Diese spezifische (dimensionslose) Farbwirkung - bzw. allgemeiner Absorptionskraft - für die am häufigsten vorkommenden färbenden Verunreinigungen, wie beispielsweise von 3d-Übergangsmetallionen, gibt die folgende Aufstellung wieder, jeweils bezogen auf eine Konzentration des entsprechenden Ions von 1 ppm (bezogen auf das Gewicht):

| Element | Absorptionskraft/ppm |
|---|---|
| $Fe^{2+/3+}$ | 1 |
| $Co^{2+}$ | 300 |
| $Ni^{2+}$ | 70 |
| $Cr^{3+}$ | 50 |
| $Cu^{2+}$ | 20 |
| $Mn^{2+}$ | 5 |
| $V^{5+}$ | 2 |
| $Ti^{4+}$ | 0,5 |

Auch hierbei sind die Wertigkeiten der entsprechenden Metallionen wiederum lediglich als die "häufigste" oder "übliche" Oxidationsstufe bzw. Wertigkeit anzusehen. In welcher Oxidationsstufe ein polyvalentes Ion tatsächlich vorliegt, kann dabei in der Regel nicht bestimmt werden.

Abzustellen ist daher auf den Gesamtgehalt des entsprechenden Metalls bzw. von dessen Ionen in der Glaszusammensetzung.

Die vorstehende Aufstellung zeigt, dass nicht lediglich der Gesamtgehalt an Verunreinigungen für die optischen Eigenschaften, beispielsweise für das Absorptionsverhalten im elektromagnetischen Wellenlängenbereich von 200 nm bis 1500 nm, insbesondere für das Absorptionsverhalten im elektromagnetischen Wellenlängenbereich von 200 nm bis 1200 nm, zu berücksichtigen ist, sondern vielmehr eine gewichtete Betrachtung des Gehalts an Verunreinigungen beachtlich ist.

Daher gilt für das erfindungsgemässe Glass:

$$\Sigma\ (1 * Fe + 300 * Co + 70 * Ni + 50 * Cr + 20 * Cu + 5 * Mn + 2 * V)\ [ppm\ bezogen\ auf\ die\ Masse]$$

ist kleiner 200 ppm, bevorzugt kleiner 150 ppm, mehr bevorzugt kleiner 100 ppm, besonders bevorzugt kleiner 50 ppm und ganz besonders bevorzugt kleiner 25 ppm, wobei der Gesamtgehalt des Flachglases an den betrachteten Metallen unabhängig von deren Oxidationsstufe betrachtet wird.

Die Elementbezeichnungen stehen dabei für den Gesamtgehalt des Flachglases an dem jeweiligen Element, unabhängig von dessen Oxidationsstufe, angegeben in ppm, wobei die ppm jeweils auf die Masse bezogen sind.

Dieser angegebene summarische Farbwert ist als maximal zulässiger Grenzwert zu verstehen. Das jeweilige färbende 3d-Übergangsmetallion darf also nicht in beliebiger Konzentration vorliegen. Um eine besonders hohe Transmission bzw. eine besonders geringe Absorption zu erzielen, müssen die Gehalte an stark färbenden Ionen komplementär zu der im Allgemeinen höheren Hauptverunreinigung Eisen (Fe) im Glas, hier also dem Flachglas, entsprechend der größeren Farbwirkung niedriger angepasst sein.

Durch diese spezifische Minimierung des Gehalts an stark färbenden Metallen bzw. deren Ionen kann eine besonders geringe Absorption - und in entsprechender Weise eine besonders hohe Transmission - des Flachglases für elektromagnetische Strahlung im Wellenlängenbereich von 200 nm bis 1500 nm erzielt werden. Auch ist es auf diese Weise das erste Mal gelungen, einen Zusammenhang zwischen der Matrix eines Glases, hier eines Borosilikatglases mit geringem Alkaligehalt, und färbenden Verunreinigungen sowie der Hauptverunreinigung Eisen herzustellen.

Der Einfluss dieser Ionen auf die Lichttransmission hängt von ihrer Wertigkeit ab und die wiederum vom Sauerstoffpartialdruck, mit der die Glasschmelze im Gleichgewicht ist. In industriellen Glasschmelzen sind immer mehrere polyvalente Ionen gleichzeitig vorhanden, die miteinander in Wechselwirkung treten können. Die Konzentration der Oxidationszustände kann sich dabei ändern.

Der Elektronenaustausch zwischen Paaren polyvalenter Ionen hat somit enormen Einfluss auf die gezielte Einstellung der Produkteigenschaften (Lichttransmission).

Die Konzentration dieser Oxidzustände wird insbesondere beeinflusst von

- der Reinheit der Glasrohstoffe und der Scherben
- dem Eintrag färbender 3d-Elemente durch Wechselwirkungen zwischen Glasschmelze und dem Feuerfest-Material des Schmelzaggregates (Glaskorrosion)

Für das Erschmelzen von Borosilikatgläsern nach Ausführungsformen der vorliegenden Schrift werden daher vorzugsweise extrem korrosionsbeständige schmelzgegossene FeuerfestMaterialien mit einem $ZrO_2$-Gehalt von min. 90 Gew-% verwendet (Oberbegriff: HZFC - high zirconia fused cast). Diese Materialien garantieren einen minimalen Eintrag von Verunreinigungen in die Glasschmelze.

Handelsnamen für solche HZFC-Produkte sind beispielsweise:

ZB-X 9510 (ASAHI/Japan) mit 94,5 % $ZrO_2$
Monofrax Z (Monofrax/USA) mit 94 % $ZrO_2$
ER 1195 (SEFPRO/Fra) mit 94 % $ZrO_2$

Die bei der industriellen Glasschmelze von Spezialgläsern üblicherweise verwendeten schmelzgegossenen FF-Materialien vom AZS-Typ mit $ZrO_2$-Gehalten von 32 - 41 Gew.-% genügen den Anforderungen nicht.

Weiterhin müssen zum Erschmelzen von Borosilikatgläsern nach Ausführungsformen der vorliegenden Schrift im direkten Glaskontakt an hochbeanspruchten Stellen (z. B. Wall, Durchfluss, Läuterkammer, Homogenisierungskammer, Rührer, Tweel usw.) möglichst

- spezielle Refraktärmetalle wie Molybdän oder Wolfram (Hersteller Plansee, HC Starck usw.)
- spezielle Refraktär-Edelmetall-Legierungen wie Platin/Rhodium, Platin/Iridium und Platin/Gold (Hersteller Umicore/Belgien, Heraeus/DE, Tanaka/Japan usw.)

verwendet werden.

Um die Transmissionsanforderungen an die Borosilikatgläser nach Ausführungsformen der vorliegenden Schrift erfüllen zu können, muss der Verunreinigungsgehalt, speziell der Gehalt an 3d-Elementen und anderen polyvalenten Ionen in den eingesetzten Rohstoffen definiert sein.

Bei den Borosilikatgläsern nach Ausführungsformen der vorliegenden Schrift werden die 3d-Elemente im Wesentlichen über die $SiO_2$-Träger (aufbereitete natürliche Quarzsande) eingetragen, da der $SiO_2$-Gehalt dieser Gläser ca. 75 - 80 Gew.-% beträgt.

Für die Herstellung von Borosilikatgläsern vom Pyrex-Typ, also einem bekannten Typ von kommerziell erhältlichen Borosilikatgläsern, werden beispielsweise $SiO_2$-Träger mit $Fe_2O_3$-Gehalten von 150 - 500 ppm eingesetzt.

Beispiel:

| | | |
|---|---|---|
| Sand- und Tonwerke Waalbeck | Qual. Nr. 3 | max. 500 ppm $Fe_2O_3$ |
| | Qual. Nr. 3s | max. 150 ppm $Fe_2O_3$ |

Für die Herstellung der Borosilikatgläser nach Ausführungsformen der vorliegenden Schrift müssen hingehen reinere $SiO_2$-Sande verwendet werden.

Beispiele:

| | | |
|---|---|---|
| Fa. Dorfner/D | Hi-Pu 005 | max. 65 ppm $Fe_2O_3$ |
| Fa. Sigrano/NL | MAM1U | max. 50 ppm $Fe_2O_3$ |
| Fa. Sasil/Ita | Bianco Neve | max. 40 ppm $Fe_2O_3$ |
| The Quartz Corp./USA | SP2-C | max. 30 ppm $Fe_2O_3$ |
| | SP2 | max. 15 ppm $Fe_2O_3$ |
| Brementhaler Quarzit/D | Sipur A1 | max. 10 ppm $Fe_2O_3$ |
| KMC Corp./Japan | 30C | max. 30 ppm $Fe_2O_3$ |
| | 5C-E | max. 5 ppm $Fe_2O_3$ |

Diese Rohstoffe wurden beispielsweise bereits großtechnisch für die Herstellung hochtransmissiver Borosilikatflachgläser eingesetzt.

Die restlichen Borosilikatglasrohstoffe (Träger von $Al_2O_3$, Alkalioxiden, Erdalkalioxiden und $B_2O_3$) können synthetisch hergestellt werden und bringen nur einen kleinen Eintrag an 3d-Elementen.

Auf den Einsatz natürlicher Rohstoffe wie Feldspat und Rasorit muss bei der Herstellung der Borosilikatgläser nach Ausführungsformen der vorliegenden Schrift natürlich verzichtet werden.

Eine weitere Quelle für den Eintrag von 3d-Elementen sind die Glasscherben.

Bei der Herstellung von Borosilikatgläsern wird technologisch bedingt mit Scherbengehalten im Gemenge von 30 - 70 % gearbeitet. Dabei werden nur Eigenscherben (aus der eigenen Glasproduktion, z.B. Qualitätsverluste, Glasbruch, Schneidverluste usw.) verwendet. Diese Glasscherben müssen vor der Wiederverwendung aufbereitet werden - zerkleinert auf ca. < 20 mm Scherbengröße. Die Aufbereitung des Glases erfolgt in Brechanlagen (Backenbrecher, Walzenbrecher usw). Dabei wird Abrieb von den Brechwerkzeugen erzeugt (Fe, Cr, Mn usw.), der über die Scherben in die Glasschmelze eingetragen wird. Für die Herstellung der Borosilikatgläser nach Ausführungsformen der vorliegenden Schrift ist der Eintrag von solchem Abrieb zu minimieren.

Maßnahmen sind hier:

- Entfernen des Abriebes mit Starkfeldmagnetscheidem (ca. 70 - 80 % werden entfernt)
- Entfernen des Abriebes durch Absieben der Feinfraktion < 5mm (ca. 85 - 95 %)
- Vermeidung des Abriebes durch Zerkleinerungstechnologien ohne metall. Verschleißwerkzeuge (Gegenstromverfahren, Detonationsverfahren usw.
- Minimierung des Scherbengehaltes auf ≤ 20 % im Gemenge

Die Herstellung technischer Borosilikatgläser erfolgt heute in Glasschmelzwannen. Die Teilprozesse Aufschmelzen des Gemenges, Entgasen und Läutern laufen im gleichen Aggregat nebeneinander ab. Die Beheizung der Schmelzaggregate erfolgt üblicherweise rekuperativ oder regenerativ mit Öl oder Gas als Brennstoff und Luft als Sauerstofflieferant.

Die Borosilikatgläser nach Ausführungsformen der vorliegenden Schrift werden bevorzugt in Oxy-Fuel-Wannen erschmolzen (Erdgas-Sauerstoffbrenner). Die Homogenisierung des Glases erfolgt in einem der Schmelzwanne nachgeschaltetem Aggregat aus Refraktär-Edelmetall.

Die Sauerstoffchemie der Glasschmelze hat großen Einfluss auf die Lichttransmission der erschmolzenen Gläser.

Der Sauerstoffpartialdruck $pO_2$ beschreibt die Reaktivität (oder das chemische Potential) der gelösten Komponente Sauerstoff in der Schmelze.

Kommerzielle Na-Ca-Flachgläser werden mit Na-Sulfat geläutert. Diese Sulfatläuterung ist im Interesse einer guten Läuterwirkung immer reduzierend eingestellt. Der Sauerstoffpartialdruck ($pO_2$) in der Glasschmelze ist daher niedrig (< 0,35 bar). Als Folge dessen ist der Gehalt an $Fe^{2+}$ hoch, so dass es wegen der Absorption im NIR zu einem blaugrünen Farbeindruck kommt. Um zu einen $Fe^{2+}$ ärmeren Glas zu gelangen, ist man auf zusätzliche Maßnahmen angewiesen, wie z.B. die chemische Entfärbung mit $CeO_2$ oder auch $Cr_2O_3$:

$$Ce^{4+} + Fe^{2+} < - > Ce^{3+} + Fe^{3+}$$

oder

die physikalische Entfärbung (Überfärbung) mit Selen oder seltenen Erden ($Er_2O_3$).

Beide Maßnahmen führen aber zu einer Transmissionsverringerung im UV-VIS.

Für die Borosilikatgläser nach Ausführungsformen der vorliegenden Schrift werden insbesondere Alkalihalogenide als Läutermittel verwendet, vorzugsweise NaCl.

Ab 1450°C kommt es zu einer Verdampfung von NaCl. Die Vielzahl der rasch gebildeten/anwachsenden Blasen führt zu einer intensiven Durchmischung der Glasschmelze und entfernt gelöste Gase /$N_2$, $H_2O$, $CO_2$ usw.). Eine reduzierende Brennereinstellung ist nicht erforderlich. Die Wannenschmelze der Borosilikatgläser nach Ausführungsformen wird insbesondere mit Erdgas/Sauerstoff-Brennern beheizt.

Vorwärmung des $O_2$-Trägers wie bei der Luft ist nicht erforderlich.

Die Wannenbrenner sind vorzugsweise konstant operierende Brenner, ein Brennerwechsel wie bei regenerativen Anlagen ist nicht erforderlich.

In der Regel werden die Wannenbrenner leicht oxidierend eingestellt.

Das Verhältnis Erdgas : $O_2$ beträgt 1 : 2,2 -2,3; das stöchiometrische Verhältnis für die Verbrennung würde bei ca. 1 : 2,1 (abhängig vom Methangehalt des Erdgases) liegen. Je nach Bedarf kann stärker oxidierend oder auch reduzierend eingestellt werden.

Bei einer Borosilikatglas-Schmelzwanne sind auf beiden Seiten in Wannenlängsrichtung üblicherweise 5 - 10 Brenner angeordnet. Durch Variation des Verhältnisses Gas:$O_2$ kann der $pO_2$ in der Glasschmelze beeinflusst und somit die gewünschten Redoxverhältnisse der polyvalenten Ionen eingestellt werden.

Vorzugsweise wird der $pO_2$ in der Glasschmelze direkt an verschiedenen Stellen elektrochemisch mittels Elektroden durch den Wannenboden gemessen.

Weitere alternative oder zusätzliche Möglichkeiten für die gezielte Einstellung der Redoxverhältnisse sind beispielsweise:

- Verwendung von $O_2$-haltigen Rohstoffen, die durch Zersetzung $O_2$ abgeben und das $Fe^{2+}$/$Fe^{3+}$ Verhältnis in Richtung $Fe^{3+}$ verschieben
- Verwendung von $NaNO_3$ als $Na_2O$-Träger anstelle des üblicherweise verendeten $Na_2CO_3$
- Verwendung von $KNO_3$ als $K_2O$-Träger anstelle des üblicherweise verendeten $K_2CO_3$
- Bubbling mit $O_2$ - Gas (Gaseinblasen)

Bubbling ist ein Verfahren zur Beeinflussung von Glasströmungen in der Schmelzwanne durch einen künstlich erzeugten Vorhang von Blasen, die vom Wannenboden stetig aufsteigen. Dazu werden Bubbling-Düsen am Wannenboden nahe des Quellpunktes angeordnet. Das blasenerzeugende Gas (meist Luft oder $N_2$) wird durch die Blasdüsen vom Wannenboden in die Glasschmelze gedrückt.

Vorzugsweise wird für Borosilikatgläser gemäß Ausführungsformen der vorliegenden Schrift als blasenerzeugendes Gas reiner Sauerstoff ($O_2$) verwendet. Auch damit kann man die gewünschten Redoxverhältnisse zusätzlich beeinflussen, beispielsweise auch durch die Anzahl der Blasdüsen, einen Blasdüsendurchsatz von 0 bis 200l/h, den Blasdüsenvordruck usw.

All diese Maßnahmen zur Einstellung eines definierten Redoxverhältnisses sind Stand der Technik und dem betreffenden Fachmann auch bekannt.

Gemäß einer weiteren Ausführungsform liegt die Transformationstemperatur $T_g$ des Flachglases zwischen 450°C und 550°C.

Die Transformationstemperatur $T_g$ ist bestimmt durch den Schnittpunkt der Tangenten an die beiden Äste der Ausdehnungskurve beim Messung mit einer Heizrate von 5K/min. Dies entspricht einer Messung nach ISO 7884-8 bzw. DIN 52324.

Gemäß einer nochmals weiteren Ausführungsform weist das Flachglas eine Viskosität $\eta$ auf, wobei lg $\eta$ einen

Wert von 4 bei Temperaturen zwischen 1000°C und 1320 °C aufweist. Ein Glas einer solchen Zusammensetzung ist gut zu verarbeiten und insbesondere auch einem Verfahren zur Herstellung eines Flachglases zugänglich. Insbesondere sind auf diese Weise auch Flachgläser herstellbar, welche eine besonders niedrige Oberflächenrauigkeit $R_a$ von weniger als 2 nm aufweisen.

Ein weiterer Vorteil eines Flachglases gemäß einer Ausführungsform besteht in der geringen Brechzahl. Gemäß einer Ausführungsform beträgt die Brechzahl $n_d$ des Flachglases bei einer Lichtwellenlänge von 587,6 nm weniger als 1,475.

Besonders vorteilhaft ist eine Ausführungsform des Flachglases gekennzeichnet durch chemische Beständigkeitswerte

- gegen Wasser gemäß DIN ISI 719 der Klasse HGB 1,
- gegen Säuren gemäß DIN 12116 Klasse S 1 W, und
- gegen Laugen gemäß DIN ISO 695 Klasse A3 oder besser.

Solche (hohen) chemischen Beständigkeitswerte des Flachglases sind vorteilhaft, da auf diese Weise das Flachglas in unterschiedlichen Prozessen und Verfahren, wie sie beispielsweise in der Chipindustrie, aber auch in anderen Bereichen, bei denen teils aggressive Medien mit der Oberfläche des Flachglases in Berührung kommen können, eingesetzt werden können. Insbesondere ist der geringe Gehalt des Flachglases an Alkalien hier von Vorteil. Jedoch ist nicht allein der Alkaligehalt eines Glases, wie beispielsweise eines Flachglases, bestimmend für dessen chemische Beständigkeit, sondern auch die Einbindung der Alkalien in der Glasmatrix. Die hohen Werte für die chemische Beständigkeit des Flachglases gemäß einer Ausführungsform sind also auf das Zusammenspiel eines niedrigen Gesamt-Alkaligehaltes einerseits und auf die besonders feste strukturelle Einbindungen der Alkalien in der Glasmatrix andererseits zurückzuführen.

Gemäß einer weiteren bevorzugten Ausführungsform umfasst das Flachglas die folgenden Komponenten:

| | |
|---|---|
| $SiO_2$ | 72 Mol-% bis 85 Mol-%, bevorzugt 76 Mol-% bis 85 Mol-%, |
| $B_2O_3$ | 10 Mol-% bis 25 Mol-%, bevorzugt 10 Mol-% bis 22 Mol-%, |
| $Al_2O_3$ | 0,2 Mol-% bis 2,5 Mol-%, |
| $Na_2O$ | 0,5 Mol-% bis 5,0 Mol-%, |
| $K_2O$ | 0 Mol-% bis 1,0 Mol-%, |
| $Li_2O$ | 0 Mol-% bis 1,5 Mol-%, |

wobei vorzugsweise die Summe der vom Flachglas umfassten Alkalimetalloxide $Na_2O$, $K_2O$, $Li_2O$, vorzugsweise die Summe aller vom Flachglas umfassten Alkalimetalloxide, weniger als 5 Mol-% beträgt.

Das Flachglas ist gemäß einer Ausführungsform hergestellt oder herstellbar in einem Schmelzprozess mit anschließender Heißformgebung, insbesondere in einem Floatverfahren, einem Walzverfahren oder einem Ziehverfahren, wie einem Down-Draw-Verfahren, vorzugsweise einem Overflow-Fusion-Down-Draw-Verfahren, oder einem Up-Draw-Verfahren oder einem Foucault-Verfahren.

Beispiele

In der folgenden Tabelle 1 sind die Zusammensetzungen von Flachgläsern mit einer hohen Transmission im Wellenlängenbereich von 200 nm bis 1500 nm aufgeführt. Die folgende Tabelle 2 umfasst Zusammensetzungen von Vergleichsgläsern.

Die Abkürzung "nnwb" steht hierbei für "nicht nachweisbar".

**Tabelle 1 Beispiele ausgewählter Flachgläser mit hoher Transmission im Wellenlängenbereich von 200 nm bis 1500 nm**

| Glas | | 1 | 2 | 3 | 4 | 5 | 6 | 7 | 8 | 9 | 10 | 11 | 12 | 13 |
|---|---|---|---|---|---|---|---|---|---|---|---|---|---|---|
| $SiO_2$ | Mol-% | 83,0 | 83,0 | 83,4 | 83,4 | 83,4 | 83,2 | 83,8 | 82,2 | 80,4 | 76,7 | 74,9 | 75,4 | 75,8 |
| $B_2O_3$ | Mol-% | 11,5 | 11,5 | 11,2 | 11,2 | 11,2 | 13,3 | 12,9 | 15,0 | 16,9 | 20,5 | 21,8 | 21,8 | 21,8 |
| $Al_2O_3$ | Mol-% | 1,5 | 1,5 | 1,5 | 1,5 | 1,5 | 0,7 | 0,7 | 0,6 | 0,6 | 0,6 | 0,7 | 0,7 | 0,7 |
| $Na_2O$ | Mol-% | 4,0 | 4,0 | 3,5 | 3,5 | 3,5 | 2,8 | 1,2 | 0,5 | 0,5 | 0,5 | 1,1 | 0,6 | 0,6 |
| $K_2O$ | Mol-% | - | - | 0,4 | 0,4 | 0,4 | - | 0,6 | 0,7 | 0,6 | 0,7 | 0,5 | 0,5 | 0,3 |
| $Li_2O$ | Mol-% | - | - | - | - | - | - | 0,8 | 1,0 | 1,0 | 1,0 | 1,0 | 1,0 | 0,8 |
| andere | Mol-% | - | - | - | - | - | - | - | - | - | - | - | - | - |
| $\Sigma(SiO_2 + B_2O_3)$ | | 94,5 | 94,5 | 94,6 | 94,6 | 94,6 | 96,5 | 96,7 | 97,2 | 97,3 | 97,2 | 96,7 | 97,2 | 97,6 |
| $\Sigma R_2O$ mol-% | | 4,0 | 4,0 | 4,1 | 4,1 | 4,1 | 2,8 | 2,6 | 2,2 | 2,1 | 2,2 | 2,6 | 2,1 | 1,7 |
| $\dfrac{\sum(R_2O + Al_2O_3)}{\sum(SiO_2 + B_2O_3)}$ | | 0,0582 | 0,0582 | 0,0571 | 0,0571 | 0,0571 | 0,0363 | 0,0341 | 0,0288 | 0,0277 | 0,0288 | 0,0341 | 0,0288 | 0,0246 |
| $B_2O_3/ SiO_2$ | | 0,1386 | 0,1386 | 0,1343 | 0,1343 | 0,1343 | 0,1599 | 0,1539 | 0,1825 | 0,2102 | 0,2673 | 0,2911 | 0,2891 | 0,2876 |
| $Fe^{3+}$ | ppm | 50 | 70 | 30 | 5 | 1,5 | 30 | 45 | 15 | 35 | 25 | 9 | 5 | 7 |
| $Cr^{3+}$ | ppm | 1,1 | 1,2 | 0,4 | 0,2 | 0,1 | 0,5 | 0,5 | 3,0 | 0,5 | 0,3 | 0,2 | 0,2 | 0,2 |
| $Ni^{2+}$ | ppm | 0,1 | 0,1 | 0,02 | 0,02 | 0,02 | 0,20 | 0,25 | 0,15 | 0,3 | 0,2 | 0,1 | 0,1 | 0,1 |
| $Co^{2+}$ | ppm | 0,05 | 0,10 | 0,01 | 0,01 | 0,01 | 0,05 | 0,1 | 0,01 | 0,1 | 0,1 | 0,05 | 0,04 | 0,04 |
| $Cu^{2+}$ | ppm | 0,40 | 0,26 | 0,2 | 0,2 | 0,2 | 0,25 | 0,23 | 2,0 | 0,14 | 0,25 | 0,13 | 0,1 | 0,10 |
| $Mn^{2+}$ | ppm | 1,1 | 1,3 | 0,4 | 0,3 | 0,3 | 0,4 | 0,95 | 0,3 | 0,4 | 0,35 | 0,28 | 0,25 | 0,31 |
| $V^{5+}$ | ppm | 2,1 | 2,3 | 0,5 | 0,4 | 0,2 | 1,3 | 1,5 | 0,4 | 1,2 | 0,9 | 0,5 | 0,3 | 0,4 |
| Absorptionskraft ppm | | 138 | 185 | 61 | 36 | 16 | 94 | 130 | 48 | 118 | 93 | 46 | 38 | 40 |
| Ce | ppm | <1 | <1 | <1 | <1 | <1 | <1 | <1 | <1 | <1 | <1 | <1 | <1 | <1 |
| As | ppm | nnwb. | nnwb. | nnwb. | nnwb. | nnwb. | nnwb. | nnwb. | nnwb. | nnwb. | nnwb. | nnwb. | nnwb. | nnwb. |
| Sb | ppm | nnwb. | nnwb. | nnwb. | nnwb. | nnwb. | nnwb. | nnwb. | nnwb. | nnwb. | nnwb. | nnwb. | nnwb. | nnwb. |
| Sn | ppm | nnwb. | nnwb. | nnwb. | nnwb. | nnwb. | nnwb. | nnwb. | nnwb. | nnwb. | nnwb. | nnwb. | nnwb. | nnwb. |
| S | ppm | nnwb. | nnwb. | nnwb. | nnwb. | nnwb. | nnwb. | nnwb. | nnwb. | nnwb. | nnwb. | nnwb. | nnwb. | nnwb. |
| $H_2O$ | mmol $l^{-1}$ | 37,6 | 36,5 | 32,5 | 33,4 | 34,2 | 31,8 | 30,6 | 38,7 | 39,9 | 41,5 | 42,9 | 42,1 | 40,8 |
| $\sigma$ | g $cm^{-3}$ | 2,22 | 2,22 | 2,22 | 2,22 | 2,22 | 2,18 | 2,175 | 2,17 | 2,16 | 2,145 | 2,13 | 2,12 | 2,11 |
| a | $10^{-6}K^{-1}$ | 3,29 | 3,29 | 3,28 | 3,28 | 3,28 | 2,77 | 2,60 | 2,65 | 2,85 | 3,07 | 3,29 | 3,04 | 2,78 |
| Tg | °C | 533 | 533 | 528 | 528 | 528 | 530 | 527 | 517 | 500 | 486 | 467 | 510 | 530 |
| L4 | °C | 1252 | 1252 | 1275 | 1275 | 1275 | 1260 | 1283 | 1264 | 1224 | 1184 | 1143 | 1204 | 1290 |

(fortgesetzt)

| Glas L3 | 1 | 2 | 3 | 4 | 5 | 6 | 7 | 8 | 9 | 10 | 11 | 12 | 13 |
|---|---|---|---|---|---|---|---|---|---|---|---|---|---|
| °C | 1504 | 1504 | 1538 | 1538 | 1538 | 1512 | 1537 | 1526 | 1471 | 1430 | 1377 | 1456 | 1544 |
| $n_d$ | 1,472 | 1,472 | 1,471 | 1,471 | 1,471 | 1,470 | 1,469 | 1,467 | 1,466 | 1,464 | 1,465 | 1,464 | 1,463 |
| Transmission 1 mm | | | | | | | | | | | | | |
| bei 250 nm % | | 20.0 | 32,9 | 86,9 | 90,1 | | | 63,3 | | | | | |
| 300 nm % | | 82,7 | 87,1 | 92,1 | 92,2 | | | 90,1 | | | | | |
| 546 nm % | | 92,7 | 92,8 | 93,1 | 93,2 | | | 93,0 | | | | | |
| 1400 nm % | | 93,1 | 93,2 | 93,3 | 93,3 | | | 93,3 | | | | | |
| H ISO 719 | HGB 1 | HGB 1 | HGB 1 | HGB 1 | HGB 1 | HGB 1 | HGB 1 | HGB 1 | HGB 1 | HGB 1 | HGB 1 | HGB 1 | HGB 1 |
| S ISO 1776 | S 1 | S 1 | S 1 | S 1 | S 1 | S 1 | S 1 | S 1 | S 1 | S 1 | S 1 | S 1 | S 1 |
| L ISO 695 | L A2 | L A2 | L A2 | L A2 | L A2 | L A3 | L A3 | L A3 | L A3 | L A3 | L A3 | L A3 | L A3 |
| Die lektrizitätskonstante bei 5 GHz | 4,4 | 4,4 | 4,5 | 4,5 | 4,5 | 4,1 | 4,1 | 4,1 | 4,0 | 4,0 | 3,95 | 3,9 | 3,9 |
| Dissipationsfaktor bei 5 GHz | 0,0038 | 0,0038 | 0,0037 | 0,0037 | 0,0037 | 0,0030 | 0,0025 | 0,0021 | 0,0020 | 0,0019 | 0,0018 | 0,0016 | 0,0015 |

**Tabelle 2 Vergleichsgläser**

| Glas | | A | B | C | D | E | F | G | H | I | J | M |
|---|---|---|---|---|---|---|---|---|---|---|---|---|
| $SiO_2$ | Mol-% | 71,3 | 69,1 | 81,4 | 73,4 | 69,9 | 82,6 | 68,2 | 66,8 | 67,3 | 65,5 | 82,6 |
| $B_2O_3$ | Mol-% | - | - | 9,4 | - | 7,6 | 11,6 | 7,9 | - | 4,3 | - | 11,7 |
| $Al_2O_3$ | Mol-% | 0,6 | 0,2 | 2,6 | - | 2,6 | 1,3 | 10,6 | 4,4 | 12,6 | 8,4 | 1,5 |
| $Na_2O$ | Mol-% | 12,7 | 13,0 | 5,0 | 8,4 | 6,4 | 4,3 | - | 4,6 | 13,8 | 12,1 | 3,8 |
| $K_2O$ | Mol-% | 0,2 | 0,02 | 0,5 | 5,7 | 5,8 | 0,1 | - | 4,8 | - | 4,1 | 0,4 |
| $Li_2O$ | Mol-% | - | - | - | - | - | - | - | - | - | - | - |
| $MgO$ | Mol-% | 5,9 | 6,7 | - | - | - | - | 7,2 | 3,6 | 2,0 | 8,9 | - |
| $CaO$ | Mol-% | 8,9 | 10,9 | 1,1 | 8,1 | - | - | 3,7 | 5,9 | - | 0,2 | - |
| $ZnO$ | Mol-% | - | - | - | 3,3 | 4,4 | - | - | - | - | - | - |
| $SrO$ | Mol-% | - | - | - | - | - | - | 2,2 | 4,4 | - | - | - |
| $BaO$ | Mol-% | - | - | - | 0,9 | - | - | - | 3,6 | - | 0,1 | - |
| $TiO_2$ | Mol-% | - | - | - | 0,2 | 3,3 | - | - | - | - | - | - |
| $ZrO_2$ | Mol-% | - | - | - | - | - | - | - | 1,9 | - | 0,5 | - |
| $Sb_2O_3$ | Mol-% | - | - | - | - | 0,05 | - | - | - | - | - | - |
| $SnO_2$ | Mol-% | - | - | - | - | - | - | 0,2 | - | 0,15 | - | - |
| S | Mol-% | 0,6 | 0,5 | - | - | - | - | - | - | - | 0,1 | - |
| andere | Mol-% | - | 0,018 ($Er_2O_3$) | - | - | - | - | - | - | - | - | - |
| $Fe^{3+}$ | ppm | 900 | 95 | 240 | 100 | 100 | 120 | 150 | 1000 | 300 | 300 | 130 |
| $Cr^{3+}$ | ppm | | 0,9 | | | | 5 | | | | | 4 |
| $Ni^{2+}$ | ppm | | 0,5 | | | | 2 | | | | | 3 |
| $Co^{2+}$ | ppm | | 0,65 | | | | 2 | | | | | 2 |
| $Cu^{2+}$ | ppm | | 1,75 | | | | 4 | | /// | | | 5 |
| $Mn^{2+}$ | ppm | | 3,7 | | | | 2 | | | | | 2 |
| $V^{5+}$ | ppm | | 1,2 | | | | 2 | | | | | 2 |

| Glas | | A | B | C | D | E | F | G | H | I | J | M |
|---|---|---|---|---|---|---|---|---|---|---|---|---|
| Absorptionskraft | ppm | | 426 | | | | 1204 | | | | | 1239 |
| $\sigma$ | g cm$^{-3}$ | 2,5 | 2,51 | 2,28 | 2,55 | 2,51 | 2,23 | 2,43 | 2,77 | 2,39 | 2,48 | 2,225 |
| $\alpha$ | $10^{-6}$K$^{-1}$ | 8,9 | 9,0 | 4,1 | 9,4 | 7,2 | 3,35 | 3,2 | 8,3 | 7,6 | 9,8 | 3,44 |
| $T_g$ | °C | 520 | 515 | 585 | 533 | 557 | 516 | 717 | 569 | 630 | 604 | 518 |
| L4 | °C | 1020 | 1022 | 1271 | 1033 | 1051 | 1252 | 1295 | 1145 | | | 1251 |
| $n_d$ | | 1,517 | | 1,479 | 1,5225 | 1,523 | 1,4738 | 1,51 | 1,55 | 1,5 | 1,51 | 1,48 |
| H | ISO 719 | HGB 3 | HGB 3 | HGB 1 | HGB 3 | HGB 1 | HGB 1 | HGB 1 | HGB 1 | | | HGB 1 |
| S | ISO 1776 | S 3 | S 3 | S 1 | S 2 | S 2 | S 1 | S4 | S3 | | | S1 |
| L | ISO 695 | L A3 | L A3 | L A2 | L A2 | L A2 | L A2 | L A3 | L A1 | | | L A2 |
| Dielektrizitätskonstante | | | | | | | | | | | | |
| | bei 1 MHz | 7,6 | | | | | 4,7 | 5,1 | | | | 4,6 |
| | | | | | | | | | | | | |
| Dissipationsfaktor | | | | | | | 0,0039 | 0.0049 | | | | 0,0049 |
| bei 5 GHz | 1 MHz | 0.0300 | | | | | | | | | | |
| | | | | | | | | | | | | |

Zeichnungen

Es zeigen

Fig. 1 Spektren der Transmission elektromagnetischer Strahlung im Wellenlängenbereich von 200 nm bis 1500 nm von erfindungsgemäßen Flachgläsern,

Fig. 2 ein weiteres Transmissionsspektrum im Wellenlängenbereich von 200 nm bis 800 nm des Beispielglases 8 im Vergleich mit ausgewählten Vergleichsgläsern, sowie

Fig. 3 eine schematische und nicht maßstabsgetreue Darstellung eines Flachglases.

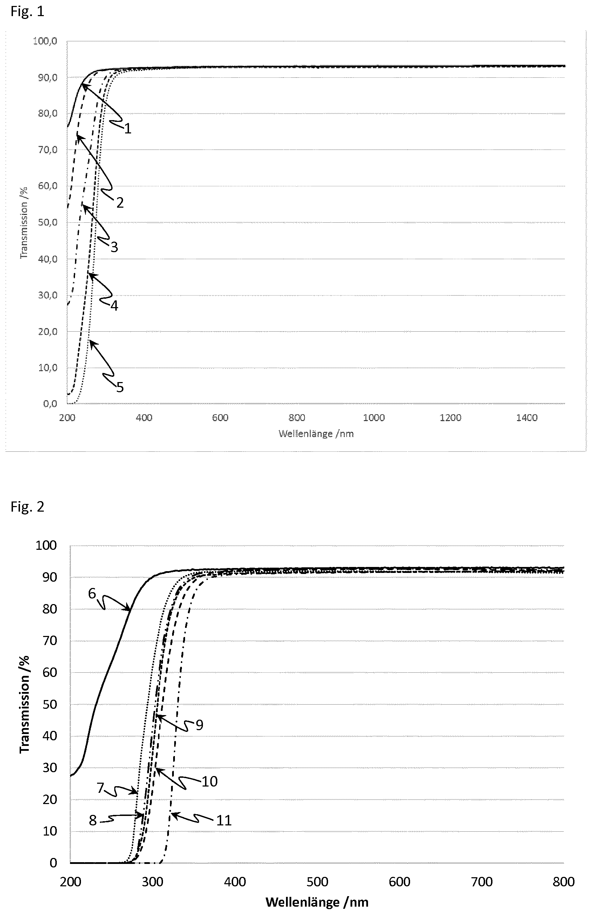

Fig. 1 zeigt die Transmissionsspektren unterschiedlicher Flachgläser für eine Dicke von 1 mm gemäß unterschiedlichen Ausführungsformen.

Transmissionskurve 1 wurde erhalten für ein Flachglas mit einer Zusammensetzung entsprechend Glas 5 aus Tabelle 1.

Transmissionskurve 2 wurde erhalten für ein Flachglas mit einer Zusammensetzung entsprechend Glas 4 aus Tabelle 1.

Transmissionskurve 3 wurde erhalten für ein Flachglas mit einer Zusammensetzung entsprechend Glas 8 aus Tabelle 1.

Transmissionskurve 4 wurde erhalten für ein Flachglas mit einer Zusammensetzung entsprechend Glas 3 aus Tabelle 1.

Transmissionskurve 5 wurde erhalten für ein Flachglas mit einer Zusammensetzung entsprechend Glas 2 aus Tabelle 1.

Fig. 2 zeigt ein weiteres Transmissionsspektrum eines Flachglases der Dicke 1 mm gemäß einer Ausführungsform im Vergleich mit Transmissionsspektren, die für ausgewählte Vergleichsgläser ebenfalls in einer Dicke von 1 mm erhalten wurden. Betrachtet wird der Wellenlängenbereich von 200 nm bis 800 nm.

Transmissionskurve 6 wurde erhalten für ein Flachglas mit einer Zusammensetzung entsprechend Glas 8 aus Tabelle 1.

Transmissionskurve 7 wurde erhalten für ein Glas einer Dicke von 1 mm mit einer Zusammensetzung entsprechend Glas B aus Tabelle 2.

Transmissionskurve 8 wurde erhalten für ein Glas einer Dicke von 1 mm mit einer Zusammensetzung entsprechend Glas F aus Tabelle 2.

Transmissionskurve 9 wurde erhalten für ein Glas einer Dicke von 1 mm mit einer Zusammensetzung entsprechend Glas D aus Tabelle 2.

Transmissionskurve 10 wurde erhalten für ein Glas einer Dicke von 1 mm mit einer Zusammensetzung entsprechend Glas I aus Tabelle 2.

Transmissionskurve 11 wurde erhalten für ein Glas einer Dicke von 1 mm mit einer Zusammensetzung entsprechend Glas E aus Tabelle 2.

Deutlich erkennbar ist die im Vergleich zu den Gläsern des Standes der Technik erhöhte Transmission im gesamten dargestellten Wellenlängenbereich für das Flachglas gemäß einer Ausführungsform der Erfindung.

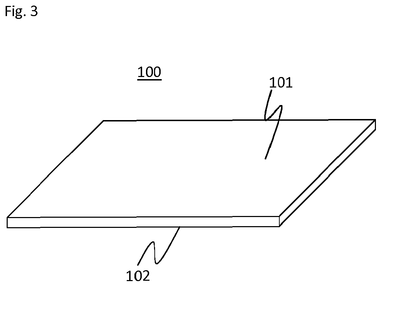

In Fig. 3 ist dargestellt eine schematische und nicht maßstabsgetreue Darstellung eines Flachglases 100. Das Flachglas 100 umfasst zwei Oberflächen 101 und 102. Als Oberflächen 101, 102 des Flachglases 100 werden dabei im Rahmen der vorliegenden Erfindung die beiden prinzipiellen Flächen des Glaskörpers bezeichnet, also diejenigen Flächen, welche durch die Länge und die Breite des Glaskörpers bestimmt sind.

Das Flachglas 100 weist eine Transmission für elektromagnetische Strahlung auf, insbesondere im Wellenlängenbereich von 200 nm bis 1500 nm, wobei die Transmission des Flachglases für elektromagnetische Strahlung bei einer Dicke des Flachglases von 1 mm bei einer Wellenlänge von 254 nm 20% oder mehr, bevorzugt 60 % oder mehr, besonders bevorzugt 85% oder mehr und ganz besonders bevorzugt 88 % oder mehr, und bei einer Wellenlänge von 300 nm 82 % oder mehr, bevorzugt 90 % oder mehr, besonders bevorzugt 91% oder mehr, und bei einer Wellenlänge von 350 nm 90 % oder mehr, bevorzugt 91% oder mehr, und/oder bevorzugt bei einer Wellenlänge von 546 nm 92% oder mehr, bevorzugt 92,5% oder mehr, und bei einer Wellenlänge von 1400 nm 92,5% oder mehr, bevorzugt 93% oder mehr, und im Wellenlängenbereich von 380 nm bis 780 nm 91,5 % oder mehr, bevorzugt 92 % oder mehr, und im Wellenlängenbereich von 780 nm bis 1500 nm 92,5% oder mehr, bevorzugt 93% oder mehr, beträgt.

Gemäß einer bevorzugten Ausführungsform beträgt die Summe des Gehalts des Flachglases 100 an Oxiden von Netzwerkbildnern, insbesondere an Oxiden von Silicium und/oder Bor, höchstens 98 Mol-%.

Bevorzugt beträgt der lineare thermische Ausdehnungskoeffizient $\alpha$ des Flachglases 100 zwischen $2{,}4 * 10^{-6}$/K und $3{,}5 * 10^{-6}$/K.

Der Gehalt des Flachglases 100 an $SiO_2$ beträgt gemäß einer Ausführungsform zwischen 72 Mol-% und 85 Mol-%, vorzugsweise zwischen 76 Mol-% und 85 Mol-%.

Gemäß einer weiteren Ausführungsform umfasst das Flachglas 100 $B_2O_3$, wobei vorzugsweise der Gehalt des Flachglases an $B_2O_3$ zwischen 10 Mol-% und 25 Mol-%, insbesondere vorzugsweise zwischen 10 Mol-% und 22 Mol-%, beträgt.

Bevorzugt umfasst das Flachglas 100 $SiO_2$ und $B_2O_3$, wobei vorzugsweise gilt, dass

$$\Sigma\ (SiO_2 + B_2O_3)\qquad 92\ \text{Mol-\%} - 98\ \text{Mol\%}$$

Gemäß einer weiteren Ausführungsform des Flachglases 100 gilt, dass

$$\Sigma\ R_2O\qquad 1\ \text{Mol-\%} - 5\ \text{Mol-\%, wobei } R_2O \text{ für Alkalimetalloxide steht.}$$

Bevorzugt gilt hinsichtlich des Verhältnisses der Stoffmengen der Komponenten des Flachglases 100:

$$B_2O_3/SiO_2\qquad 0,12 \text{ bis } 0,35, \text{ und/oder}$$
$$\Sigma(Me_xO_y)/(Z(SiO_2+B_2O_3))\qquad 0,02 \text{ bis } 0,10,$$

wobei Me steht für ein Metall, welches in Oxiden üblicherweise die Oxidationszahl y aufweist, insbesondere für ein Alkali- und/oder Erdalkalimetall sowie für Aluminium.

Für das Verhältnis der Gewichtsanteile der vom Flachglas umfassten Eisen-Ionen gilt:

$$0,1 \leq Fe^{2+}/(Fe^{2+}+Fe^{3+}) \leq 0,3.$$

Für die Gewichtsanteile in ppm der vom Flachglas 100 umfassten folgenden Metalle Fe, Co, Ni, Cr, Cu, Mn, V gilt:

$$\sum (1 * Fe + 300 * Co + 70 * Ni + 50 * Cr + 20 * Cu + 5 * Mn + 2 * V)\ \textit{[ppm bezogen auf die Masse]}$$

ist kleiner 200 ppm, bevorzugt kleiner 150 ppm, mehr bevorzugt kleiner 100 ppm, besonders bevorzugt keiner 50 ppm und ganz besonders bevorzugt kleiner 25 ppm,
wobei der Gesamtgehalt des Flachglases 100 an den betrachteten Metallen unabhängig von deren Oxidationsstufe betrachtet wird.

Vorzugsweise liegt die Transformationstemperatur $T_g$ des Flachglases 100 zwischen 450°C und 550°C.

Gemäß einer Ausführungsform des Flachglases 100 weist diese eine Viskosität $\eta$ auf, wobei lg $\eta$ einen Wert von 4 bei Temperaturen zwischen 1000°C und 1320 °C aufweist.

Gemäß noch einer Ausführungsform des Flachglases 100 beträgt die Brechzahl $n_d$ des Flachglases 100 bei einer Lichtwellenlänge von 587,6 nm weniger als 1,475.

Bevorzugt ist das Flachglas 100 gekennzeichnet durch chemische Beständigkeitswerte

- gegen Wasser gemäß DIN ISI 719 der Klasse HGB 1,
- gegen Säuren gemäß DIN 12116 Klasse S 1 W, und
- gegen Laugen gemäß DIN ISO 695 Klasse A3 oder besser.

Gemäß einer weiteren Ausführungsform umfasst das Flachglas 100 die folgenden Komponenten

| | |
|---|---|
| $SiO_2$ | 72 Mol-% bis 85 Mol-%, bevorzugt 76 Mol-% bis 85 Mol-% |
| $B_2O_3$ | 10 Mol-% bis 25 Mol-%, bevorzugt 10 Mol-% bis 22 Mol-% |
| $Al_2O_3$ | 0,2 Mol-% bis 2,5 Mol-% |
| $Na_2O$ | 0,5 Mol-% bis 5,0 Mol-% |
| $K_2O$ | 0 Mol-% bis 1,0 Mol-% |
| $Li_2O$ | 0 Mol-% bis 1,5 Mol-% |

wobei vorzugsweise die Summe der vom Flachglas 100 umfassten Alkalimetalloxide $Na_2O$, $K_2O$, $Li_2O$, vorzugsweise die Summe aller vom Flachglas 100 umfassten Alkalimetalloxide, weniger als 5 Mol-% beträgt.

Das Flachglas 100 ist gemäß einer Ausführungsform hergestellt oder herstellbar in einem Schmelzprozess mit anschließender Heißformgebung, insbesondere in einem Floatverfahren, einem Walzverfahren oder einem Ziehverfahren, wie einem Down-Draw-Verfahren, vorzugsweise einem Overflow-Fusion-Down-Draw-Verfahren, oder einem Up-Draw-Verfahren oder einem Foucault-Verfahren.

**Patentansprüche**

1. Flachglas, wobei die Transmission des Flachglases für elektromagnetische Strahlung bei einer Dicke des Flachglases von 1 mm

   bei einer Wellenlänge von 254 nm 20% oder mehr, bevorzugt 60 % oder mehr, besonders bevorzugt 85% oder mehr und ganz besonders bevorzugt 88 % oder mehr, und
   bei einer Wellenlänge von 300 nm 82 % oder mehr, und
   bei einer Wellenlänge von 350 nm 90 % oder mehr, und
   bei einer Wellenlänge von 546 nm 92% oder mehr, und
   bei einer Wellenlänge von 1400 nm 92,5% oder mehr, und
   im Wellenlängenbereich von 380 nm bis 780 nm 91,5% oder mehr, und
   im Wellenlängenbereich von 780 nm bis 1500 nm 92,5% oder mehr, beträgt, wobei für das Verhältnis der Gewichtsanteile der vom Flachglas umfassten Eisen-Ionen gilt:

$$0,1 \leq Fe^{2+}/(Fe^{2+}+Fe^{3+}) \leq 0,3$$

   und
   wobei für die Gewichtsanteile in ppm der vom Flachglas umfassten folgenden Metalle Fe, Co, Ni, Cr, Cu, Mn, V gilt:

$$\sum (1 * Fe + 300 * Co + 70 * Ni + 50 * Cr + 20 * Cu + 5 * Mn + 2 * V) \text{ [ppm bezogen auf die Masse]}$$

   ist kleiner 200 ppm,
   wobei der Gesamtgehalt des Flachglases an den betrachteten Metallen unabhängig von deren Oxidationsstufe betrachtet wird.

2. Flachglas, nach Anspruch 1, wobei die Summe des Gehalts des Flachglases an Oxiden von Netzwerkbildnern, höchstens 98 Mol-% beträgt.

3. Flachglas nach einem der Ansprüche 1 oder 2, wobei der lineare thermische Ausdehnungskoeffizient $\alpha$ des Flachglases zwischen $2,4 * 10^{-6}/K$ und $3,5 * 10^{-6}/K$ beträgt.

4. Flachglas nach einem der Ansprüche 1 bis 3, wobei der Gehalt des Flachglases an $SiO_2$ zwischen 72 Mol-% und 85 Mol-% beträgt.

5. Flachglas nach einem der Ansprüche 1 bis 4, wobei das Flachglas $B_2O_3$ umfasst.

6. Flachglas nach einem der Ansprüche 1 bis 5, wobei das Flachglas $SiO_2$ und $B_2O_3$ umfasst.

7. Flachglas nach einem der Ansprüche 1 bis 6, wobei gilt, dass

$$\Sigma\ R_2O \qquad 1\ \text{Mol-%} - 5\ \text{Mol-%,}$$

   wobei $R_2O$ für Alkalimetalloxide steht.

8. Flachglas nach einem der Ansprüche 1 bis 7, wobei hinsichtlich des Verhältnisses der Stoffmengen der Komponenten des Flachglases gilt:

| B$_2$O$_3$/SiO$_2$ | 0,12 bis 0,35, und/oder |
| $\Sigma$ (Me$_x$O$_y$)/($\Sigma$ (SiO$_2$+B$_2$O$_3$) | 0,02 bis 0,10, |

wobei Me steht für ein Alkali- und/oder Erdalkalimetall sowie für Aluminium.

9. Flachglas nach einem der Ansprüche 1 bis 8, wobei für die Gewichtsanteile in ppm der vom Flachglas umfassten folgenden Metalle Fe, Co, Ni, Cr, Cu, Mn, V gilt:

$$\Sigma \ (1 * Fe + 300 * Co + 70 * Ni + 50 * Cr + 20 * Cu + 5 * Mn + 2 * V) \ [\text{ppm bezogen auf die Masse}]$$

ist kleiner 150 ppm,
wobei der Gesamtgehalt des Flachglases an den betrachteten Metallen unabhängig von deren Oxidationsstufe betrachtet wird.

10. Flachglas nach einem der Ansprüche 1 bis 9, wobei die Transformationstemperatur T$_g$ des Flachglases zwischen 450°C und 550°C liegt.

11. Flachglas nach einem der Ansprüche 1 bis 10 mit einer Viskosität $\eta$, wobei lg $\eta$ einen Wert von 4 bei Temperaturen zwischen 1000°C und 1320 °C aufweist.

12. Flachglas nach einem der Ansprüche 1 bis 11, wobei die Brechzahl n$_d$ des Flachglases bei einer Lichtwellenlänge von 587,6 nm weniger als 1,475 beträgt.

13. Flachglas nach einem der Ansprüche 1 bis 12, **gekennzeichnet durch** chemische Beständigkeitswerte

    - gegen Wasser gemäß DIN ISO 719 der Klasse HGB 1,
    - gegen Säuren gemäß DIN 12116 Klasse S 1 W, und
    - gegen Laugen gemäß DIN ISO 695 Klasse A3 oder besser.

14. Flachglas nach einem der Ansprüche 1 bis 13, umfassend die folgenden Komponenten

| SiO$_2$ | 72 Mol-% bis 85 Mol-% |
| B$_2$O$_3$ | 10 Mol-% bis 25 Mol-% |
| Al$_2$O$_3$ | 0,2 Mol-% bis 2,5 Mol-% |
| Na$_2$O | 0,5 Mol-% bis 5,0 Mol-% |
| K$_2$O | 0 Mol-% bis 1,0 Mol-% |
| Li$_2$O | 0 Mol-% bis 1,5 Mol-% |

15. Flachglas nach einem der vorhergehenden Ansprüche, hergestellt oder herstellbar in einem Schmelzprozess mit anschließender Heißformgebung.

**Claims**

1. A flat glass, wherein, at a thickness of 1 mm, the flat glass exhibits a transmittance to electromagnetic radiation which

    is 20 % or more, preferably 60 % or more, more preferably 85 % or more, and most preferably 88 % or more at a wavelength of 254 nm; and
    is 82 % or more at a wavelength of 300 nm; and
    is 90 % or more at a wavelength of 350 nm; and
    is 92 % or more at a wavelength of 546 nm; and

is 92.5 % or more at a wavelength of 1400 nm; and
is 91.5 % or more in a wavelength range from 380 nm to 780 nm; and
is 92.5 % or more in a wavelength range from 780 nm to 1500 nm;
wherein the following applies for the ratio of weight fractions of iron ions contained in the flat glass:

$$0.1 \leq Fe^{2+}/(Fe^{2+}+Fe^{3+}) \leq 0.3;$$

and
wherein the following applies for the weight fractions, in ppm, of the following metals Fe, Co, Ni, Cr, Cu, Mn, V contained in the flat glass:

$$\Sigma (1*Fe + 300*Co + 70*Ni + 50*Cr + 20*Cu + 5*Mn + 2*V) \text{ [ppm by mass]}$$

is less than 200 ppm;

wherein the total content of the considered metals is considered irrespective of the oxidation state thereof.

2. The flat glass according to claim 1, wherein the flat glass comprises a content of oxides of network formers of not more than 98 mol% in total.

3. The flat glass according to any one of claims 1 or 2, wherein the flat glass exhibits a coefficient of linear thermal expansion $\alpha$ between $2.4*10^{-6}/K$ and $3.5*10^{-6}/K$.

4. The flat glass according to any one of claims 1 to 3, wherein the flat glass has a content of $SiO_2$ between 72 mol% and 85 mol%.

5. The flat glass according to any one of claims 1 to 4, wherein the flat glass comprises $B_2O_3$.

6. The flat glass according to any one of claims 1 to 5, wherein the flat glass comprises $SiO_2$ and $B_2O_3$.

7. The flat glass according to any one of claims 1 to 6, wherein

$$\Sigma R_2O \quad \text{is between 1 mol\% and 5 mol\%,}$$

wherein $R_2O$ stands for alkali metal oxides.

8. The flat glass according to any one of claims 1 to 7, wherein with regard to a ratio of molar amounts of the components of the flat glass, the following applies:

$B_2O_3/SiO_2$ is 0,12 to 0.35; and/or
$\Sigma(Me_xO_y)/(\Sigma(SiO_2+B_2O_3))$ is 0.02 to 0.10;

wherein Me represents an alkali metal and/or alkaline earth metal, and aluminium.

9. The flat glass according to any one of claims 1 to 8, wherein with regard to the weight fractions, in ppm, of the metals Fe, Co, Ni, Cr, Cu, Mn, V contained in the flat glass, the following applies:

$$\Sigma (1*Fe + 300*Co + 70*Ni + 50*Cr + 20*Cu + 5*Mn + 2*V) \text{ [ppm by mass]}$$

is less than 150 ppm, wherein the total content of the considered metals is considered irrespective of the oxidation state thereof.

10. The flat glass according to any one of claims 1 to 9, wherein the flat glass has a transformation temperature $T_g$ between 450 °C and 550 °C.

**11.** The flat glass according to any one of claims 1 to 10, having a viscosity η with an lg η value of 4 at temperatures between 1000 °C and 1320 °C.

**12.** The flat glass according to any one of claims 1 to 11, wherein the refractive index $n_d$ of the flat glass at a light wavelength of 587.6 nm is less than 1.475.

**13.** The flat glass according to any one of claims 1 to 12, **characterised by** values of chemical resistance

- against water according to DIN ISO 719 class HGB 1;
- against acids according to DIN 12116 class S 1 W; and
- against alkalis according to DIN ISO 695 class A3 or better.

**14.** The flat glass according to any one of claims 1 to 13, comprising the following constituents:

| | |
|---|---|
| $SiO_2$ | 72 mol% to 85 mol%, |
| $B_2O_3$ | 10 mol% to 25 mol%, |
| $Al_2O_3$ | 0.2 mol% to 2.5 mol%, |
| $Na_2O$ | 0.5 mol% to 5.0 mol%, |
| $K_2O$ | 0 mol% to 1.0 mol%, |
| $Li_2O$ | 0 mol% to 1.5 mol%. |

**15.** The flat glass according to any one of the preceding claims, produced or producible by a melting process with subsequent hot forming.

**Revendications**

**1.** Verre plat, dans lequel la transmission du verre plat pour le rayonnement électromagnétique, avec une épaisseur de 1 mm du verre plat,

pour une longueur d'onde de 254 nm, est de 20 % ou plus, de préférence de 60 % ou plus, de manière particulièrement avantageuse de 85 % ou plus, et de manière tout à fait préférée de 88 % ou plus, et
pour une longueur d'onde de 300 nm, est de 82 % ou plus, et
pour une longueur d'onde de 350 nm, est de 90 % ou plus, et
pour une longueur d'onde de 546 nm, est de 92 % ou plus, et
pour une longueur d'onde de 1 400 nm, est de 92,5 % ou plus, et
dans la gamme de longueurs d'onde allant de 380 nm à 780 nm, est de 91,5 % ou plus, et
dans la gamme de longueurs d'onde allant de 780 nm à 1 500 nm, est de 92,5 % ou plus,
le rapport des proportions en poids des ions de fer contenus dans le verre plat étant défini comme suit :

$$0,1 \leq Fe^{2+}/(Fe^{2+}+Fe^{3+}) \leq 0,3,$$

et
les proportions en poids en ppm des métaux suivants Fe, Co, Ni, Cr, Cu, Mn, V, contenus dans le verre plat, étant définies comme suit :

$$\Sigma\ (1^*Fe + 300^*Co + 70^*Ni + 50^*Cr + 20^*Cu + 5^*Mn + 2^*V)\ [ppm\ rapportées\ à\ la\ masse]$$

est inférieur à 200 ppm,

la teneur totale des métaux en question dans le verre plat étant considérée indépendamment de leur degré d'oxydation.

**2.** Verre plat selon la revendication 1, dans lequel la somme de la teneur du verre plat en oxydes de formateurs de réseau est au maximum de 98 % mol.

**3.** Verre plat selon l'une des revendications 1 ou 2, dans lequel le coefficient de dilatation thermique linéaire $\alpha$ du verre plat est compris entre 2,4 * $10^{-6}$/K et 3,5 $10^{-6}$/K,

**4.** Verre plat selon l'une des revendications 1 à 3, dans lequel la teneur du verre plat en $SiO_2$ est comprise entre 72 % mol et 85 % mol.

**5.** Verre plat selon l'une des revendications 1 à 4, dans lequel le verre plat comprend du $B_2O_3$.

**6.** Verre plat selon l'une des revendications 1 à 5, dans lequel le verre plat comprend du $SiO_2$ et du $B_2O_3$.

**7.** Verre plat selon l'une des revendications 1 à 6, pour lequel il est défini que

$$\Sigma\ R_2O \qquad\qquad 1\ mol\ \%\ à\ 5\ mol\ \%,$$

$R_2O$ désignant des oxydes de métaux alcalins.

**8.** Verre plat selon l'une des revendications 1 à 7, pour lequel le rapport des quantités de matière des constituants du verre plat est défini comme suit :

$$B_2O_3/SiO_2 \qquad\qquad 0,12\ à\ 0,35,\ et/ou$$
$$\Sigma\ (Me_xO_y)/(\Sigma\ (SiO_2+B_2O_3)) \quad 0,02\ à\ 0,10,$$

Me désignant un métal alcalin et/ou un métal alcalino-terreux ainsi que l'aluminium.

**9.** Verre plat selon l'une des revendications 1 à 8, dans lequel les proportions en poids en ppm des métaux suivants Fe, Co, Ni, Cr, Cu, Mn, V, contenus dans le verre plat, sont définies comme suit :

$$\Sigma\ (1{}^*Fe + 300{}^*Co + 70{}^*Ni + 50{}^*Cr + 20{}^*Cu + 5{}^*Mn + 2{}^*V),\ [ppm\ rapportées\ à\ la\ masse]$$

est inférieur à 150 ppm, la teneur totale des métaux en question dans le verre plat étant considérée indépendamment de leur degré d'oxydation.

**10.** Verre plat selon l'une des revendications 1 à 9, dans lequel la température de transformation $T_g$ du verre plat est comprise entre 450 °C et 550 °C.

**11.** Verre plat selon l'une des revendications 1 à 10, présentant une viscosité $\eta$, 1g $\eta$ ayant une valeur de 4 à des températures comprises entre 1 000 °C et 1 320°C.

**12.** Verre plat selon l'une des revendications 1 à 11, dans lequel l'indice de réfraction $n_d$ du verre plat est inférieur à 1,475, pour une longueur d'onde lumineuse de 587,6 nm.

**13.** Verre plat selon l'une des revendications 1 à 12, **caractérisé en ce qu'**il présente les valeurs de résistance chimique suivantes :

- à l'eau, selon DIN ISO 719, de classe HGB 1,
- aux acides, selon DIN 121 16, classe S 1 W, et
- aux bases, selon DIN ISO 695, classe A3 ou mieux.

**14.** Verre plat selon l'une des revendications 1 à 13, comprenant les constituants suivants :

| | |
|---|---|
| SiO$_2$ | 72 % mol à 85 % mol |
| B$_2$O$_3$ | 10 % mol à 25 % mol |
| Al$_2$O$_3$ | 0,2 % mol à 2,5 % mol |
| Na$_2$O | 0,5 % mol à 5,0 % mol |
| K$_2$O | 0 % mol à 1,0 % mol |
| Li$_2$O | 0 % mol à 1,5 % mol |

15. Verre plat selon l'une des revendications précédentes, fabriqué ou susceptible d'être fabriqué selon un processus de fusion avec formage à chaud subséquent.

Fig. 1

Fig. 2

Fig. 3

**IN DER BESCHREIBUNG AUFGEFÜHRTE DOKUMENTE**

**In der Beschreibung aufgeführte Patentdokumente**

- WO 2012146860 A1
- DE 4325656 A1
- DE 10150884 A1
- US 20170247284 A1
- US 9145333 B1
- EP 1446362 B1
- DE 102014119594 A1
- US 20170052311 A1
- US 20170247285 A1
- JP 5540506 B
- WO 2017070500 A1
- WO 2017070066 A1
- JP 2010208906 A
- US 4298389 A
- US 20140152914 A1
- EP 2261183 A2
- DE 69214985 T2
- DE 4338128 C1
- DE 4335204 C1
- DE 3801840 A1
- US 4925814 A
- DE 102009021115 A1
- DE 102012219614 B4
- DE 2519505
- DE 3826586 A1
- WO 2016115685 A1
- WO 2017119399 A1
- WO 2017052338 A1
- JP 2015193521 A
- WO 2016194780 A1